# EUROPEAN PATENT SPECIFICATION

(11) **EP 2 348 749 B1**
(45) Date of publication and mention of the grant of the patent: **30.09.2015**
(21) Application number: 10151601.1
(22) Date of filing: 25.01.2010
(51) Int. Cl.: H04Q 3/62

(54) **Facilitating verification of call leg setup in third party call control systems**
Vereinfachung der Verifizierung der Anrufabschnitteinrichtung in Fremdanrufsteuerungssysteme
Simplification de la vérification de la configuration d'un tronçon d'appel dans les systèmes de contrôle des appels tiers

(43) Date of publication of application: 27.07.2011
(73) Proprietor: BlackBerry Limited, Waterloo, ON N2K 0A7 (CA)
(72) Inventor: Siddique, Gibran, Mississauga Ontario L4W 0B5 (CA); Gupta, Abhinav, Los Angeles, CA 90046 (US)
(74) Representative: MERH-IP Matias Erny Reichl Hoffmann

(56) References cited:
- US-A1- 2007 201 510

## Description

### TECHNICAL FIELD

The present disclosure relates to third party call control systems, and more particularly to facilitating verification of call leg setup in third party call control systems.

### BACKGROUND

In a third party call control (3PCC) system, a central controller is used to set up and manage a telephone call, or other form of media session (e.g. a videoconference), between two endpoints. The endpoints may be computers, computing devices or network nodes whose specific nature or makeup may depend upon the type of media session being controlled. For example, if the media session is a telephone call, the endpoints may be conventional wired PSTN telephones, voice over IP (VOIP) telephones, mobile devices such as cellular telephones or smartphones, softphones executing on computing devices such as laptop computers, desktop computers, tablet computers, or the like, to name but several examples. The controller (or "call control server") may perform the setup and management of the telephone call based on user input received from either or both endpoints, i.e. from the calling party, the called party, or both. The controller may also be a form of computer, computing device or network node.

In an exemplary 3PCC system, a call control server may use a private branch exchange (PBX) in support of its call setup and management responsibilities. When setting up a telephone call between endpoints, the call control server may command the PBX to set up two call legs. The first call leg may be between the PBX and the endpoint of the calling party, and the second call leg may be between the PBX and the endpoint of the called party. The call control server may then command the PBX to connect or bridge the two call legs in order to create the desired end-to-end telephone call between the endpoints.

It is desirable for call leg setup to be performed successfully.

US 2007/0201510 A1 discloses an apparatus for addressing compatibility in a session protocol environment which includes a communications platform operable to communicate with a first endpoint and a second endpoint, wherein one of the endpoints may support out-of-band Dual-Tone Multi-Frequency (DTMF) and the other endpoint may support Key Press Markup Language (KPML).

### BRIEF DESCRIPTION OF THE DRAWINGS

Reference will now be made, by way of example, to the accompanying drawings which show example embodiments of the present disclosure, and in which:
FIG. 1 shows, in block diagram form, an example system for managing enterprise-related mobile calls, including an enterprise communications platform;
FIG. 2 shows, in block diagram form, further details of an embodiment of the enterprise communications platform;
FIG. 3 shows another embodiment of the enterprise communications platform that exemplifies a third party call control architecture;
FIG. 4 shows yet another embodiment of the enterprise communications platform;
FIG. 5 shows further details of the enterprise communications platform of FIG. 3;
FIG. 6A is a signaling diagram generally indicating how mobile-originated, mobile-initiated calls are processed by the network of FIG. 5;
FIG. 6B is a signaling diagram generally indicating how mobile-originated, PBX-initiated, calls are processed by the network of FIG. 5;
FIG. 7A is a signaling diagram generally indicating how mobile-terminated, mobile-initiated calls are processed by the network of FIG. 5;
FIG. 7B is a signaling diagram generally indicating how mobile-terminated, PBX-initiated calls are processed by the network of FIG. 5;
FIG. 8 illustrates an exemplary format for a command of FIG. 6B or FIG. 7B;
FIG. 9 illustrates an exemplary format for an indicator indicative of a ringing state of FIG. 6B or FIG. 7B;
FIG. 10 illustrates an exemplary format for a subscription request of FIG. 6B or FIG. 7B;
FIG.11 illustrates an exemplary format for a response to the subscription request of FIG.10; and
FIG. 12 illustrates an exemplary format for an event notification message of FIG. 6B or FIG. 7B.

Similar reference numerals may have been used in different figures to denote similar components.

### DETAILED DESCRIPTION

In one aspect, the present disclosure provides in a third party call control system, a method of facilitating verification of call leg setup, the method comprising: at a call control server in communication with a private branch exchange (PBX): sending a command for causing the PBX to initiate setup of a call leg between the PBX and a telephone device, the initiating comprising placing a telephone call to the telephone device; receiving, from the PBX, an indicator that the telephone call is in a ringing state; and in response to the indicator and before receiving confirmation from the PBX that the telephone call has been answered by the telephone device, subscribing with the PBX to receive event notification of one or more dual-tone multi-frequency (DTMF) tones provided by the telephone device via the telephone call; the DTMF tones, wherein the subscribing occurs in response to the indicator so that configuration of the PBX for providing the event notification can be completed before any of the DTMF tones arrive at the PBX.

In another aspect, the present disclosure provides a In a third party call control system, a method of facilitating verification of call leg setup, the method comprising: at a private branch exchange (PBX): in response to a command from a call control serverto initiate setup of a call leg between the PBX and a telephone device, placing a telephone call from the PBX to the telephone device; sending an indicator to the call control server to indicate that the telephone call is in a ringing state; after the sending and before receiving confirmation from the telephone device that the telephone call has been answered: receiving, from the call control server, a subscription request for event notification of one or more dual-tone multi-frequency (DTMF) tones received from the telephone device via the telephone call, configuring the PBX to provide the event notification to the call control server, wherein the receiving of the subscription request occurs before the receiving of the confirmation so that the configuring can be completed before any of the DTMF tones arrive at the PBX.

In yet another aspect, the present disclosure provides a machine-readable medium storing instructions for facilitating verification of call leg setup in a third party call control system that, when executed by a processor of a call control server, cause the call control server to: send a command to a private branch exchange (PBX) for causing the PBX to initiate setup of a call leg between the PBX and a telephone device, the initiating comprising placing a telephone call to the telephone device; receive, from the PBX, an indicator that the telephone call is in a ringing state; and in response to the indicator and before receiving confirmation from the PBX that the telephone call has been answered by the telephone device, subscribe with the PBX to receive event notification of one or more dual-tone multi-frequency (DTMF) tones provided by the telephone device via the telephone call, wherein the subscribing occurs in response to the indicator so that configuration of the PBX for providing the event notification can be completed before any of the DTMF tones arrive at the PBX.

In yet another aspect, the present disclosure provides a machine-readable medium storing instructions for facilitating verification of call leg setup in a third party call control system that, when executed by a processor of a private branch exchange (PBX), cause the PBX to: in response to a command from a call control server to initiate setup of a call leg between the PBX and a telephone device, place a telephone call from the PBX to the telephone device; send an indicator to the call control server to indicate that the telephone call is in a ringing state; after the sending and before receiving confirmation from the telephone device that the telephone call has been answered: receive, from the call control server, a subscription request for event notification of one or more dual-tone multi-frequency (DTMF) tones received from the telephone device via the telephone call, configure the PBX to provide the event notification to the call control server, wherein the receiving of the subscription request occurs before the receiving of the confirmation so that the configuring can be completed before any of the DTMF tones arrive at the PBX.

In yet another aspect, the present disclosure provides a call control server of a third party call control system, comprising: a processor; and memory interconnected with the processor storing instructions for facilitating verification of call leg setup that, when executed by the processor, cause the call control server to: send a command to a private branch exchange (PBX) for causing the PBX to initiate setup of a call leg between the PBX and a telephone device, the initiating comprising placing a telephone call to the telephone device; receive, from the PBX, an indicator that the telephone call is in a ringing state; and in response to the indicator and before receiving confirmation from the PBX that the telephone call has been answered by the telephone device, subscribe with the PBX to receive event notification of one or more dual-tone multi-frequency (DTMF) tones provided by the telephone device via the telephone call, wherein the subscribing occurs in response to the indicator so that configuration of the PBX for providing the event notification can be completed before any of the DTMF tones arrive at the PBX.

In yet another aspect, the present disclosure provides a private branch exchange (PBX), comprising: a processor; and memory interconnected with the processor storing instructions for facilitating verification of call leg setup that, when executed by the processor, cause the PBX to: in response to a command from a call control server to initiate setup of a call leg between the PBX and a telephone device, place a telephone call from the PBX to the telephone device; send an indicator to the call control server to indicate that the telephone call is in a ringing state; after the sending and before receiving confirmation from the telephone device that the telephone call has been answered: receive, from the call control server, a subscription request for event notification of one or more dual-tone multi-frequency (DTMF) tones received from the telephone device via the telephone call; and responsive to the subscription request, configure the PBX to provide the event notification to the call control server, wherein the receiving of the subscription request occurs before the receiving of the confirmation so that the configuring can be completed before any of the DTMF tones arrive at the PBX.

Other aspects of the present disclosure will be apparent to those of ordinary skill in the art from a review of the following detailed description in conjunction with the drawings.

Embodiments of the present disclosure are not limited to any particular operating system, mobile device architecture, server architecture, or computer programming language.

The present disclosure relates to the control and management of communications. Although reference may be made to "calls" or "telephone calls" in the description of example embodiments below, it will be appreciated that the described systems and methods are applicable to session-based communications in general and not limited to voice calls. It will also be appreciated that the systems and methods may not be limited to sessions and may be applicable to messaging-based communications in some embodiments.

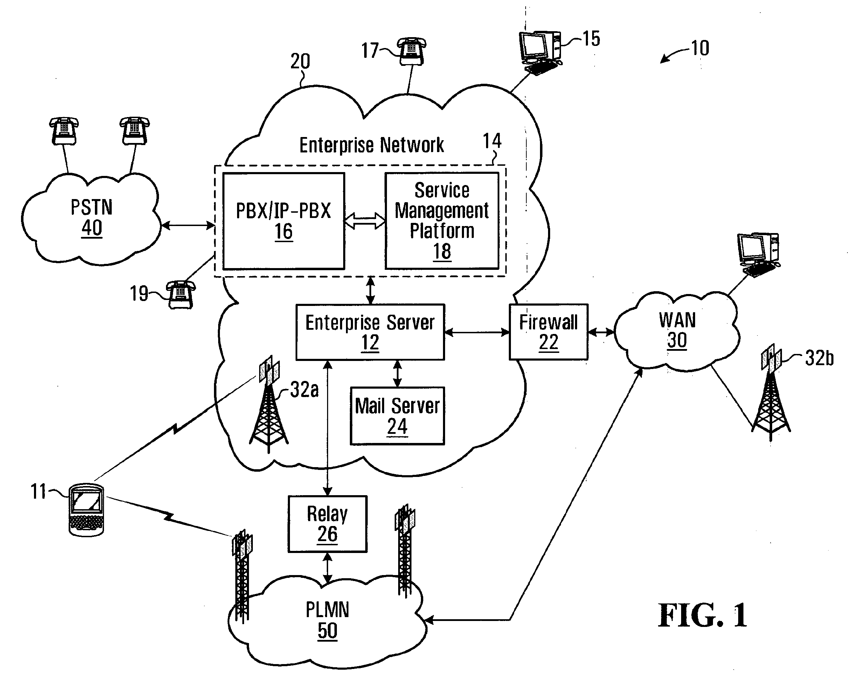

Reference is now made to FIG. 1, which shows, in block diagram form, an example system, generally designated 10, for the control and management of communications. The system 10 includes an enterprise or business system 20, which in many embodiments includes a local area network (LAN). In the description below, the enterprise or business system 20 may be referred to as an enterprise network 20. It will be appreciated that the enterprise network 20 may include more than one network and may be located in multiple geographic areas in some embodiments.

The enterprise network 20 may be connected, often through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

The enterprise network 20 may also communicate with a public land mobile network (PLMN) 50, which may also be referred to as a wireless wide area network (WWAN) or, in some cases, a cellular network. The connection with the PLMN 50 may be made via a relay 26, as known in the art.

The enterprise network 20 may also provide a wireless local area network (WLAN) 32a featuring wireless access points. Other WLANs 32 may exist outside the enterprise network 20. For example, WLAN 32b may be connected to WAN 30.

The system 10 may include a number of enterprise-associated mobile devices 11 (only one shown). The mobile devices 11, which are forms of telephone devices, may include devices equipped for cellular communication through the PLMN 50, mobile devices equipped for Wi-Fi communications over one of the WLANs 32, or dual-mode devices capable of both cellular and WLAN communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or one of the WLANs 32. In various embodiments, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in known manner, as the user moves. In some instances, the dual-mode mobile devices 11 and/or the enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

The enterprise network 20 typically includes a number of networked servers, computers, and other devices. For example, the enterprise network 20 may connect one or more desktop or laptop computers 15 (one shown). The connection may be wired or wireless in some embodiments. The enterprise network 20 may also connect to one or more digital telephone sets 17 (one shown).

The enterprise network 20 may include one or more mail servers, such as mail server 24, for coordinating the transmission, storage, and receipt of electronic messages for client devices operating within the enterprise network 20. Typical mail servers include the Microsoft Exchange Server™ and the IBM Lotus Domino™ server. Each user within the enterprise typically has at least one user account within the enterprise network 20. Associated with each user account is message address information, such as an e-mail address. Messages addressed to a user message address are stored on the enterprise network 20 in the mail server 24. The messages may be retrieved by the user using a messaging application, such as an e-mail client application. The messaging application may be operating on a user's computer 15 connected to the enterprise network 20 within the enterprise. In some embodiments, the user may be permitted to access stored messages using a remote computer, for example at another location via the WAN 30 using a VPN connection. Using the messaging application, the user may also compose and send messages addressed to others, within or outside the enterprise network 20. The messaging application causes the mail server 24 to send a composed message to the addressee, often via the WAN 30.

The relay 26 serves to route messages received over the PLMN 50 from the mobile device 11 to the corresponding enterprise network 20. The relay 26 also pushes messages from the enterprise network 20 to the mobile device 11 via the PLMN 50.

The enterprise network 20 also includes an enterprise server 12. Together with the relay 26, the enterprise server 12 functions to redirect or relay incoming e-mail messages addressed to a user's e-mail address within the enterprise network 20 to the user's mobile device 11 and to relay incoming e-mail messages composed and sent via the mobile device 11 out to the intended recipients within the WAN 30 or elsewhere. The enterprise server 12 and relay 26 together facilitate "push" e-mail service for the mobile device 11 enabling the user to send and receive e-mail messages using the mobile device 11 as though the user were connected to an e-mail client within the enterprise network 20 using the user's enterprise-related e-mail address, for example on computer 15.

As is typical in many enterprises, the enterprise network 20 includes a Private Branch exchange (although in various embodiments the PBX may be a standard PBX or an IP-PBX, for simplicity the description below uses the term PBX to refer to both) 16 having a connection with the PSTN 40for routing incoming and outgoing voice calls for the enterprise. The PBX 16 is connected to the PSTN 40 via DID trunks or PRI trunks, for example. The PBX 16 may use ISDN signaling protocols for setting up and tearing down circuit-switched connections through the PSTN 40 and related signaling and communications. In some embodiments, the PBX 16 may be connected to one or more conventional analog telephones 19. The PBX 16 is also connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from the PBX 16 to the PSTN 40 or incoming from the PSTN 40 to the PBX 16 are typically circuit-switched calls. Within the enterprise, e.g. between the PBX 16 and terminal devices, voice calls are often packet-switched calls, for example Voice-over-IP (VoIP) calls.

The enterprise network 20 may further include a Service Management Platform (SMP) 18 for performing some aspects of messaging or session control, like call control and advanced call processing features. The SMP 18 may, in some cases, also perform some media handling. Collectively the SMP 18 and PBX 16 may be referred to as the enterprise communications platform, generally designated 14. It will be appreciated that the enterprise communications platform 14 and, in particular, the SMP 18, is implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component. As will be described below, the SMP 18 may be implemented as a multi-layer platform. As will be also be described below, the SMP 18 may be referred to as a call control server, at least in the case when it is employed in a third party call control architecture.

The enterprise communications platform 14 implements the switching to connect session legs (e.g. call legs) and may provide the conversion between, for example, a circuit-switched call and a VoIP call, or to connect legs of other media sessions. In some embodiments, in the context of voice calls the enterprise communications platform 14 provides a number of additional functions including automated attendant, interactive voice response, call forwarding, voice mail, etc. It may also implement certain usage restrictions on enterprise users, such as blocking international calls or 1-1100 calls. In many embodiments, Session Initiation Protocol (SIP), as known to those of ordinary skill in the art and as defined in the Internet Engineering Task Force (IETF) Request for Comments (RFC) 3261, may be used to set-up, manage, and terminate media sessions for voice calls. Other protocols may also be employed by the enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the functions of the enterprise communications platform 14 is to extend the features of enterprise telephony to the mobile devices 11. For example, the enterprise communications platform 14 may allow the mobile device 11 to perform functions akin to those normally available on a standard office telephone, such as the digital telephone set 17 or analog telephone set 15. Example features may include direct extension dialing, enterprise voice mail, conferencing, call transfer, call park, etc.

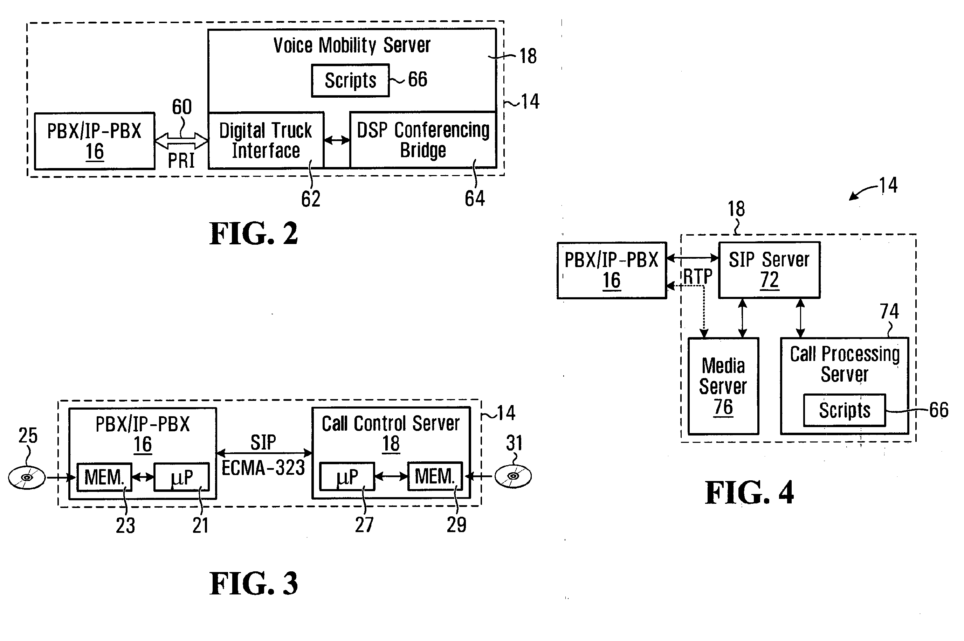

Reference is now made to FIGS. 2 to 4, which show example embodiments of the enterprise communications system 14. Again, although references are made below to "calls", "telephone calls" or call-centric features, it will be appreciated that the architectures and systems depicted and described are applicable to session-based communications in general and, in some instances, to messaging-based communications.

FIG. 2 illustrates an embodiment intended for use in a circuit-switched TDM context. The PBX 16 is coupled to the SMP 18 via PRI connection 60 or other suitable digital trunk. In some embodiments, the PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX 16 and the SMP 18.

In this embodiment, the SMP 18 assumes control over both call processing and the media itself. This architecture may be referred to as "First Party Call Control". Many of the media handling functions normally implemented by the PBX 16 are handled by the SMP 18 in this architecture. Incoming calls addressed to any extension or direct dial number within the enterprise, for example, are always first routed to the SMP 18. Thereafter, a call leg is established from the SMP 18 to the called party within the enterprise, and the two legs are bridged. Accordingly, the SMP 18 includes a digital trunk interface 62 and a digital signal processing (DSP) conferencing bridge 64. The DSP conferencing bridge 64 performs the bridging of calls for implementation of various call features, such as conferencing, call transfer, etc. The digital trunk interface 62 may be implemented as a plurality of telephonic cards, e.g. Intel Dialogic cards, interconnected by a bus and operating under the control of a processor. The digital trunk interface 62 may also be partly implemented using a processor module such as, for example, a Host Media Processing (HMP) processor.

The SMP 18 may include various scripts 66 for managing call processing. The scripts 66 are implemented as software modules, routines, functions, etc., stored in non-volatile memory and executed by the processor of the SMP 18. The scripts 66 may implement call flow logic, business logic, user preferences, call service processes, and various feature applications. FIG. 3 illustrates how, in some embodiments of the system 10, the PBX 16 performs the functions of terminating and/or bridging (connecting) media streams (e.g. call legs) to form an end-to-end call between endpoints (telephone devices), with call control functions being controlled by the SMP 18. In such embodiments, whose architecture may be referred to as "Third Party Call Control" and wherein system 10 may accordingly be referred to as a third party call control system, the SMP 18 may be referred to as a call control server 18 or, more generally, as a controller 18.

As illustrated, the PBX 16 comprises a processor 21 interconnected with memory 23. The processor 21 may for example be an Intel® Pentium® family or Pentium®-compatible microprocessor. The memory 23 may for example be volatile memory, such as synchronous dynamic random access memory (SDRAM) for example, or non-volatile memory, such as read only memory (ROM) or flash memory for example. Operation of the PBX 16 as described herein may be achieved, at least in part, through execution of software comprising executable instructions by processor 21. The software may be loaded from a machine-readable medium 25, such as an optical disk or magnetic storage medium, prior to its execution.

Similarly, the SMP 18 comprises a processor 27 interconnected with memory 29. The processor 27 may for example be an Intel® Pentium® family or Pentium®-compatible microprocessor. The memory 29 may for example be volatile memory, such as SDRAM for example, or non-volatile memory, such as ROM or flash memory for example. Operation of the SMP 18 as described herein may be achieved, at least in part, through execution of software comprising executable instructions by processor 27. The software may be loaded from a machine-readable medium 31, such as an optical disk or magnetic storage medium, prior to its execution.

The call control server 18 is coupled to the PBX 16, for example through the LAN, enabling packet-based communications and, more specifically, IP-based communications. In one embodiment, communications between the PBX 16 and the call control server 18 are carried out in accordance with SIP. In other words, the call control server 18 uses SIP-based communications to manage the setup, tear-down, and control of media handled by the PBX 16. In one example embodiment, the call control server 18 may employ a communications protocol conforming to the ECMA-269 or ECMA-323 standards for Computer Supported Telecommunications Applications (CSTA).

FIG. 4 shows yet another embodiment of the enterprise communications system 14. This embodiment reflects the adaptation of an existing set of call processing scripts to an architecture that relies on third party call control, with separate call control and media handling. The SMP 18 includes a call processing server 74. The call processing server 74 includes the scripts or other programming constructs for performing call handling functions. The SMP 18 also includes a SIP server 72 and a media server 76. The separate SIP server 72 and media server 76 logically separate the call control from media handling. The SIP server 72 interacts with the call processing server 74 using a computer-implemented communications handling protocol, such as one of the ECMA-269 or ECMA-323 standards. These standards prescribe XML based messaging for implementing Computer Supported Telecommunications Applications (CSTA).

The SIP server 72 interacts with the media server 76 using SIP-based media handling commands. For example, the SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP).

Other architectures or configurations for the enterprise communications system 14 will be appreciated by those ordinarily skilled in the art.

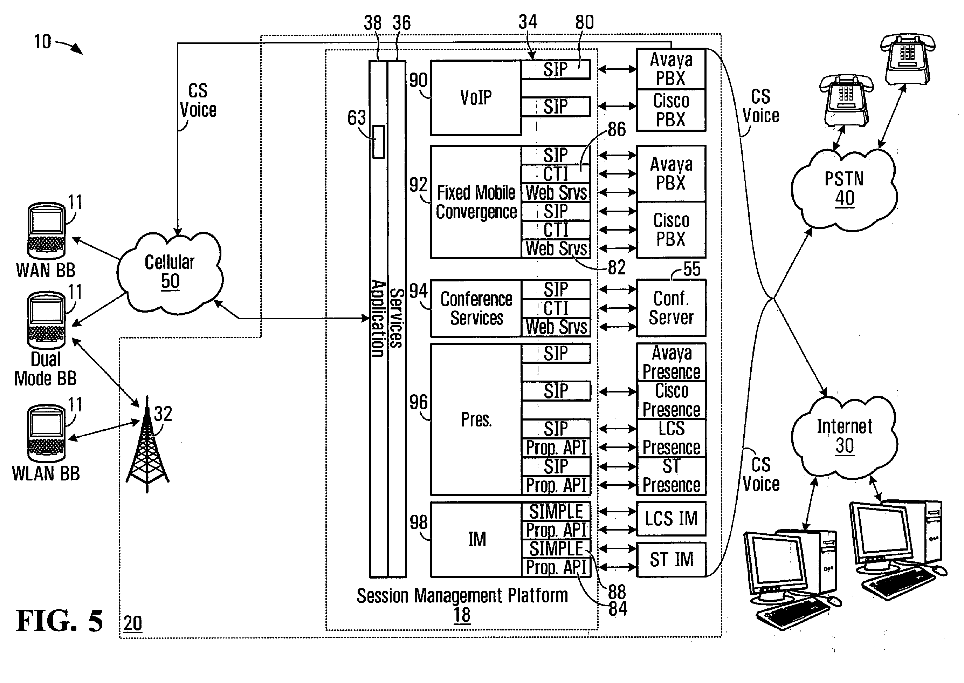

Reference is now made to FIG. 5, which shows another embodiment of the enterprise communications system 14 with a Third Party Call Control architecture. In this embodiment, the SMP 18 (or call control server 18) is a multi-layer platform that includes a protocol layer 34, a services layer 36 and an application layer 38. The protocol layer 34 includes a plurality of interface protocols configured for enabling operation of corresponding applications in the application layer 38. The services layer 36 includes a plurality of services that can be leveraged by the interface protocols to create richer applications. Finally, the application layer 38 includes a plurality of applications that are exposed out to the communication devices and that leverage corresponding ones of the services and interface protocols for enabling the applications.

Specifically, the protocol layer 34 preferably includes protocols which allow media to be controlled separate from data. For example, the protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in the enterprise network 20, which will be further described below.

For the purposes of this disclosure, SIP 80 will be utilized, although it is appreciated that the system 10 can operate using the above disclosed or additional protocols. As noted above, SIP is defined in IETF RFC 3261. SIP is a standard for multimedia session management, and more specifically is an application-layer control protocol for establishing, maintaining, modifying and terminating multimedia sessions between two or more endpoints. As further known by those of ordinary skill in the art, the SIP protocol 80 includes two interfaces for signaling: SIP-Trunk (hereinafter referred to as "SIP-T") and SIP-Line (hereinafter referred to as "SIP-L"). Specifically, the SIP-T interface is utilized when the endpoint is a non-specific entity or not registered (i.e., when communicating between two network entities). In contrast, the SIP-L interface is utilized when the endpoint is registered (i.e., when dialing to a specific extension). The specific operation of the system 10 utilizing SIP 80 will be described in further detail below.

The SMP 18 also includes a plurality of enablers, among other things, a VoIP enabler 90, a Fixed Mobile Convergence or FMC enabler 92, a conference services enabler 94, a presence enabler 96 and an Instant Messaging or IM enabler 98. Each of the enablers 90-98 are used by corresponding services in the services layer 36 that combine one or more of the enablers. Each of the applications in the application layer 38 is then combined with one or more of the services to perform the desired application. For example, a phone call service may use the VoIP or PBX enabler, and an emergency response application may use the phone call service, an Instant Messenger service, a video call service, and email service and/or a conference service.

The application layer 38 may include a conference services application 63 that, together with the conference services enabler 94, enables multiple communication devices (including desk telephones and personal computers) to participate in a conference call through use of a centralized conference server 55. As seen in FIG. 5, the conference server 55 is provided in the enterprise network 20 and is in communication with the conference services enabler 94 preferably through the SIP protocol 80, although it is recognized that additional protocols that control media separate from data may be appropriate, such as the Web Services protocol 82 or the CTI protocol 86. As will be described in further detail below, the conference call server 55 is configured for directing media and data streams to and from one or more communication devices (i.e., mobile devices 11, telephones 17, and computers 15).

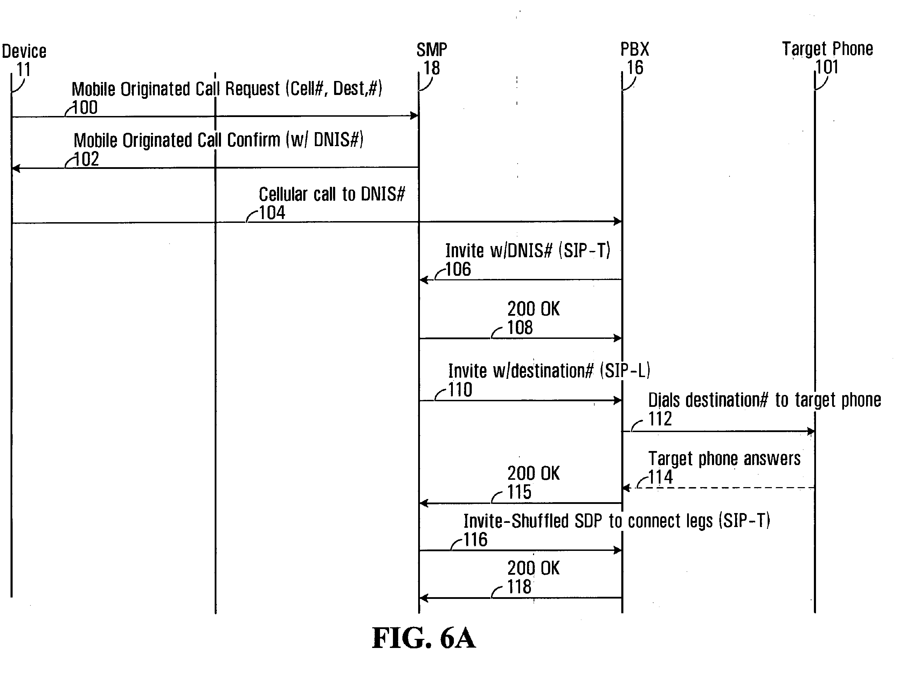

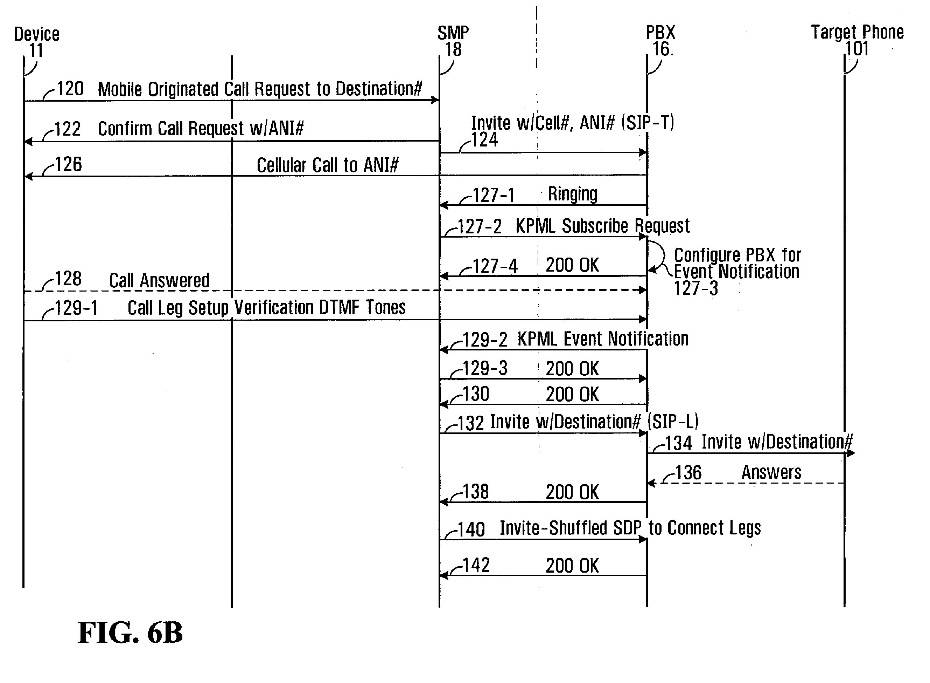

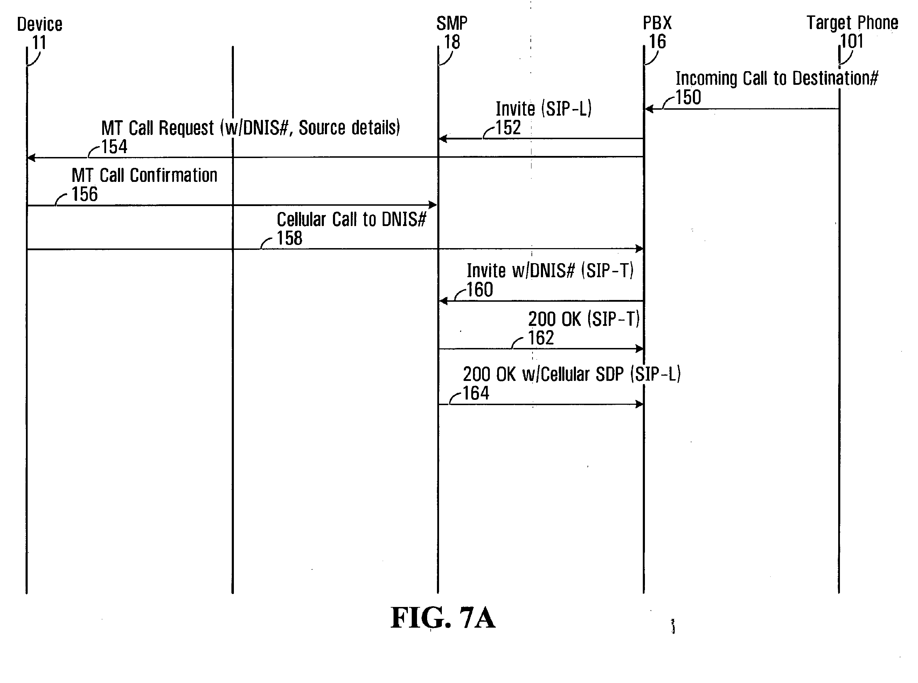

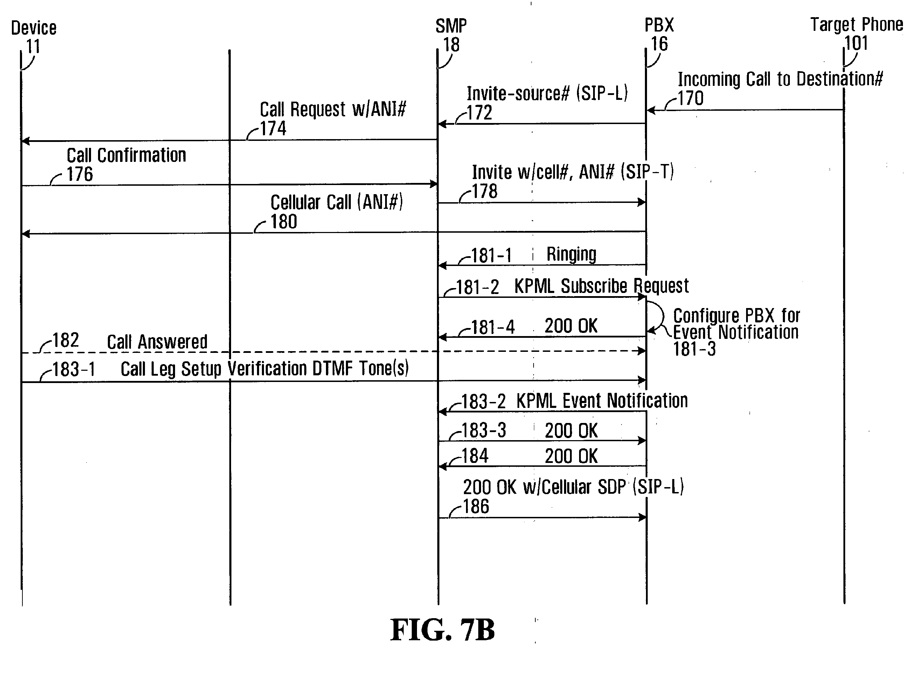

Turning now to FIGS. 6A through 7B, the general operation of the system 10 using SIP 80 as the signaling protocol will be discussed, although it is recognized that the present system is not limited to the processes discussed herein. It will be appreciated that the facilitating of verification of call leg setup in third party call control systems is not expressly shown in FIGS. 6A and 7A but is expressly shown in FIGS. 6B and 7B. The possible incorporation of this aspect into FIGS. 6A and 7A will be described below.

The signaling descriptions that follow are based on Third Party Call Control architecture, such as that illustrated in FIGS. 3 or 5. It will be appreciated that similar but slightly modified signaling may be used in a First Party Call Control architecture, wherein the PBX 16 will pass media through to the SMP 18 for direct media handling by the SMP 18. Variations in the signaling to adapt to various architectures will be appreciated by those ordinarily skilled in the art.

For clarity, in each of FIGS. 6A to 7B, two call legs (which are forms of media session legs) are established and then connected (or bridged) by the PBX 16, under the control of SMP 18, to form an end-to-end call (or, more generically, an end-to-end media session) between endpoints, which in this case are the mobile device 11 and the target phone 101. One call leg, referred to as the mobile call leg or cellular call leg, is between the PBX 16 and the mobile device 11. The other call leg, referred to as the incoming or outgoing call leg, depending upon whether the call originates from the target phone 101 or the mobile device 11 (respectively), is between the PBX 16 and the target phone 101. The order in which the call legs are established varies in FIGS. 6A to 7B. The endpoints may be referred to generally as "telephone devices" herein. Telephone devices may include conventional wired PSTN telephones, voice over IP (VOIP) telephones, mobile devices such as cellular telephones or smartphones, softphones executing on computing devices such as laptop computers, desktop computers, tablet computers, or the like, or other types of devices, to name but several examples.

FIG. 6A provides a signaling diagram (or sequence diagram) for a call originating from a mobile device 11 to a target phone 101 connected to a Private Branch Exchange Server or PBX 16 provided within the enterprise network 20. FIG. 6A shows the processing of mobile-originated, originated, mobile-initiated calls. The calls are referred to as "mobile-originated" because they originate from mobile device 11. The calls are referred to as "mobile-initiated" because, during the setup of the mobile call leg, the mobile device 11 dials the PBX16 rather than the opposite. In other words, SMP18 provides the mobile device 11 with the DNIS number into which the mobile device 11 should call.

In the present embodiment, each of PBX 16 and SMP 18 implements IETF RFC 4730 "A Session Initiation Protocol (SIP) Event Package for Key Press Stimulus (KPML)." This RFC describes the use of SIP event notification, as defined in IETF RFC 3265 (also known in the art), for providing event notification of detected Dual-Tone Multi-Frequency (DTMF) tones, using a markup language format. As is known in the art, DTMF tones, which may be referred to colloquially as "touch tones," are used in telephony to represent certain alphanumeric symbols as audio, e.g. upon the pressing of the keys of an alphanumeric keypad. More specifically, each symbol in the set {0-9, *, # A-D} is uniquely represented by a DTMF tone comprising a unique pair of frequencies, as indicated in the row and column of the table shown below whose intersection forms the cell in which the symbol is contained:

| | 1209 Hz | 1336 Hz | 1477 Hz | 1633 Hz |
|---|---|---|---|---|
| 697 Hz | 1 | 2 | 3 | A |
| 770 Hz | 4 | 5 | 6 | B |
| 852 Hz | 7 | 8 | 9 | C |
| 941 Hz | * | 0 | # | D |

Referring again to FIG. 6A, mobile device 11 first sends a mobile originated call request with its cellular number and the destination number of the target phone 101 to the SMP 18 (100). In some embodiments, the mobile originated call request may be sent via the WLAN through the enterprise server 12. In another embodiment, the call request may be sent via the PLMN/PSTN through the PBX 16, for example as an SMS message or using another messaging operation.

To set up the mobile call leg, the SMP 18 confirms the call request by sending the DNIS number to the device 11 (102). Next, the device 11 makes a cellular call using the DNIS number, which is received by the PBX 16(104). As the DNIS has been configured in the PBX 16 to be routed to the SMP 18 via SIP-T, in response to the incoming call, the PBX 16 sends an invite over SIP-T with the DNIS number to the SMP 18 (106). The SMP 18 matches the incoming call with the expected call from the mobile, and if correct, acknowledges the invite by sending a 200 OK signal to the PBX 16, indicating that the mobile call leg is established, i.e. has been successfully set up (108).

To set up the outgoing call leg to the destination target phone 101, the SMP 18 sends a SIP invite over SIP-L to the PBX 16 with the destination number of the target phone 101 (110). SIP-L is used so that the call can be correctly attributed to the individual within the organization within any call records that are being maintained by the PBX 16. When the invite is received, the PBX 16 dials the destination number to the target phone 101 (112), and the target phone 101 answers the call (114). When the target phone 101 is answered, the PBX 16 sends a 200 OK signal to the SMP 18 (115), indicating that the target phone 101 is ready to receive data and that the mobile call leg has been successfully set up.

To connect the call legs to form an end-to-end call, the SMP 18 sends an invite over SIP-T to the PBX 16 and shuffles the SDP (Session Description Protocol, as known to those of ordinary skill in the art and as defined in the IETF RFC 4566) (116). When the call legs are connected, the PBX 16 sends a second 200 OK signal to the SMP 18 (118), and the users of the device 11 and target phone 101 can communicate with one another.

Between the establishment of the mobile call leg and the answering of the outgoing call leg, the mobile user hears ringing tones. These ringing tones may be provided by the PBX 16 using the presentation of early media from the outgoing call leg, or they may be generated locally on the device 11 if early media is not available. In the latter case, it may be necessary or desirable to localize the ringing tone to match the tone normally heard with a call through the PBX 16.

FIG. 6B is a signaling diagram generally indicating how mobile-originated, PBX-initiated calls are processed by the network of FIG. 5. The calls are referred to as "PBX-initiated" because, during the setup of the mobile call leg, the PBX 16 dials the mobile device 11 rather than the opposite.

Upon receipt of a mobile originated call request (120), the SMP 18 confirms receipt of the call request to the mobile device 11 with an Automatic Number Identification (ANI) number (122), which the mobile device will use to identify the incoming call from the PBX 16.

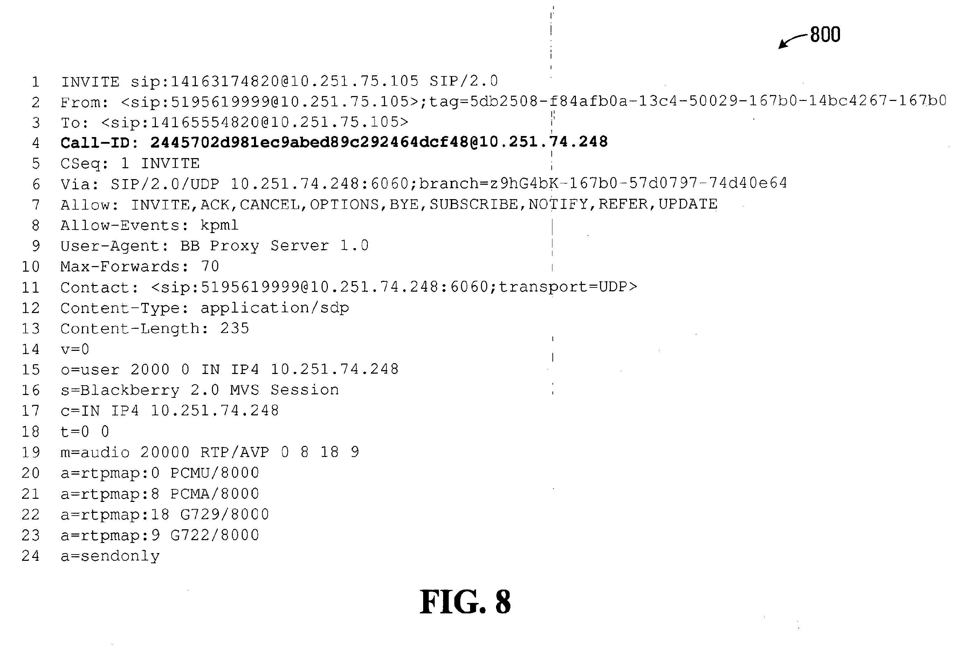

To set up the mobile call leg, the SMP 18 (which is a form of call control server, as noted above) sends a command that causes the PBX 16 to place a cellular telephone call to the mobile device 11 (124). In the present embodiment, the command is a SIP invite message in accordance with RFC 3261. As is known in the art, the SIP invite message incorporates a Call-ID which, in the context of a SIP dialog ID, can be used to uniquely identify the mobile call leg. The format of an exemplary invite message 800 is illustrated in FIG. 8.

Referringto FIG. 8, it can be seen that the invite 800 specifies a Call-ID (at line 4). The Call-ID serves to uniquely identify the call leg whose setup is being undertaken. Invite message 800 also specifies the cellular telephone number of the mobile device 11 and the ANI number that is attached to the outgoing call, i.e. the number to be used by the PBX 16 to call out to the mobile device 11. The cellular telephone number (with area code) is specified in the "To header" at line 3 of FIG. 8, and the ANI number (with area code) is specified in the "From header" at line 2 of FIG. 8. The invite message is sent over SIP-T to the PBX 16.

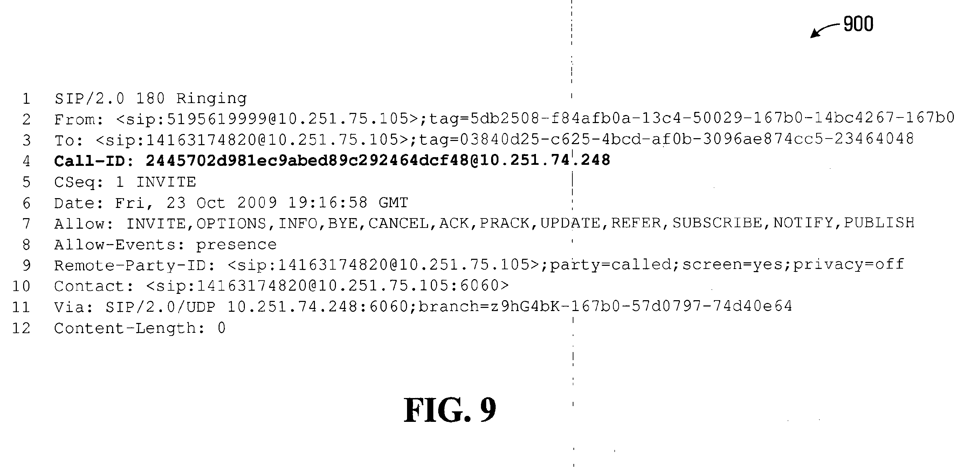

Upon receipt of the invite message, the PBX 16 places a cellular telephone call to the mobile device 11 (126, FIG. 6B), i.e. dials the cellular telephone number specified in the invite message using the outgoing ANI number specified in that message. Upon receipt of an indication that the mobile device 16 is ringing, the PBX 16 sends an indicator to the SMP 18 that the telephone call is in a ringing state (127-1). The indicator may, for example, be a protocol event from a gateway between the PBX 16 and the PSTN. The ringing state can be considered to reflect the fact that the call has reached the mobile device 11 but has not yet been answered. In the present embodiment, the indicator is a SIP 180 ringing response, in accordance with RFC 3261. The format of an exemplary ringing response 900 is illustrated in FIG. 9.

Referring to FIG. 9, it can be seen that the response 900 specifies the same Call-ID at line 4 as was specified in the SIP invite message 800 of FIG. 8. This allows the message 900 to be associated with the mobile call leg whose setup is under way.

In response to its receipt of the ringing response, the SMP 18 subscribes (127-2) with the PBX 16 to receive event notification of DTMFtones provided by the mobile device 11 via the cellular call. The DTMF tones will be used to verify call leg setup as described below. More specifically, the SMP 18 sends a SUBSCRIBE request in accordance with KPML RFC 4730.

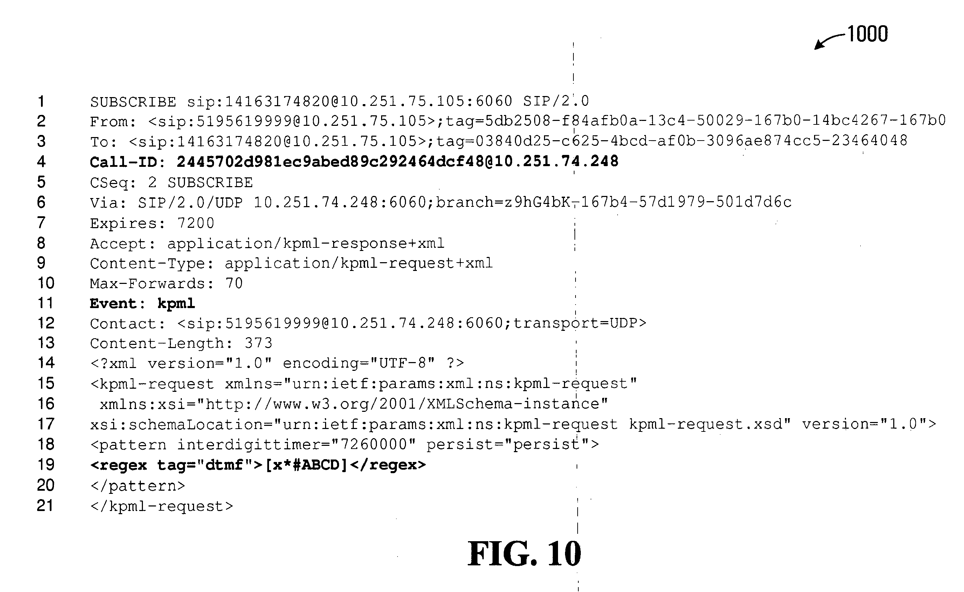

The format of an exemplary SUBSCRIBE request 1000 is illustrated in FIG. 10. In accordance with KPML RFC 4730, the markup language of the SUBSCRIBE request conforms to the extensible markup language (XML) schema of Appendix A, to which KPML requests generally comply. The request 1000 specifies the same Call-ID as was specified in the SIP invite message 800 of FIG. 8. The Call-ID serves to uniquely identify the call leg in respect of which DTMF tone event notification is being requested. The specification at line 11 of FIG. 10 of event type kpml indicates that it is desired for event notification to be provided in the manner described in KPML RFC 4730, i.e. in the form of markup language messages conforming to the KPML schema. Furthermore, the regular expression at line 19 of FIG. 10 specifies that the PBX 16 should relay all DTMF tones that it receives from the mobile device 11 over the mobile call leg, i.e. DTMF tones associated with all of the symbols specified in the table above. It could have alternatively been specified, via a different regular expression at line 19 of FIG. 10, that event notification is to be limited to the receipt of only a subset of the totality of DTMF tones (e.g. just the DTMF tone associated with the symbol "2"), or of a subset of DTMF tone sequences, from mobile device 11. In this way, the PBX 16 could be made to serve as a filter, notifying the SMP 18 only of certain DTMF tone events but not others.

Upon receipt of the SUBSCRIBE request 1000, the PBX 16 configures itself (127-3, FIB 6B) to provide the requested event notification to the SMP 18. Configuration may involve parsing the SUBSCRIBE request to extract information, such as the Call-ID (or, more generally, SIP dialog) and the regular expression identifying the symbol(s) (and thus the DTMF tone(s)) of interest, and based on that information, invoking software logic branches, subroutines, or setting configuration variables at the PBX 16 for the purpose of readying the PBX 16 to provide the desired event notification. It should be noted that this configuration occurs in parallel with the ringing of the placed call at the mobile device 11 (and, possibly in some cases, with the answering 128 of that call by the device 11, described below). As a result, the configuration of the PBX 16 should be complete by the time that an audio channel has been established between the mobile device 11 and the PBX 16. This minimizes the likelihood that any DTMF tone(s) arriving at the PBX 16 will be inadvertently "dropped" due to the PBX being unprepared for their arrival, which could compromise the verification of call leg setup.

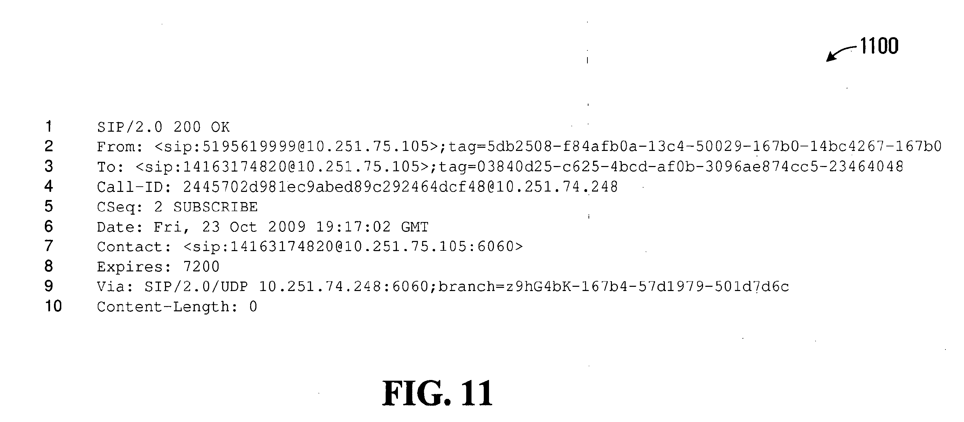

Responsive to the SUBSCRIBE request of 127-2, the PBX 16 sends a 200 OK signal (i.e. SIP 200 OK message) to the SMP 18, in accordance with the KPML RFC 4730, at FIG. 6B, 127-4. An exemplary format of this message is illustrated in FIG. 11 at 1100. As illustrated, the OK message 1100 recites the same Call-ID (at line 4 of FIG. 11) as in the SUBSCRIBE request message 1000 of FIG. 10 and further indicates the fact that the OK message is responsive to a SUBSCRIBE request (at line 5 of FIG. 11). These fields allow the SMP 18 to determine that message 1100 is responsive to message 1000.

At this stage, the call is answered by the mobile device 11, i.e., its state changes from ringing to answered (128). For clarity, the answering occurs automatically at the mobile device 11, and not due to any user action such as the pressing of a key. The answering of the call may occur transparently from the perspective of the user. The PBX may receive a protocol event, e.g. via a gateway to the PSTN, indicative of the answering of the call. The protocol event could be a SIP, H323 or MGCP protocol event for example.

The mobile device 11 checks whether the ANI number of the incoming call matches the anticipated ANI which was earlier communicated to the mobile device 11 at 122. If the two match, this will confirm that the call is from the PBX 16. If the ANI number is stripped for any particular reason, then the device 11 may be configured to answer the call as a regular cellular call, or it may reject the call as unknown.

Presuming that the ANI numbers match, the mobile device 11 next generates and sends one or more DTMF tones (129-1, FIG. 6B) over the audio channel of the cellular telephone call that was answered at 128. The DTMF tones are for use in verifyingthatthe call leg has been successfully set up. The mobile device 11 is preprogrammed to send the DTMF tones(s) automatically soon after the call is answered. This may be referred to as "1-way verification" and may speed call leg verification in comparison to other approaches, e.g. "2-way verification", wherein one or more DTMF tones are initially sent from the PBX 16 (possibly at the instruction of the SMP 18) to the mobile device and the mobile device sends DTMF tones in response. The DTMF tone or tone sequence that is sent at 129-1 may be preprogrammed at the mobile device 11, i.e. it may be predetermined. In the present example, a single DTMF tone, associated with the symbol "2," is send at 129-1. For clarity, the sending of the DTMF tone is not the result of any pressing of a key by the user of mobile device 11, but rather is performed automatically by device 11. The sending of the DTMF tone may occur transparently from the perspective of the user.

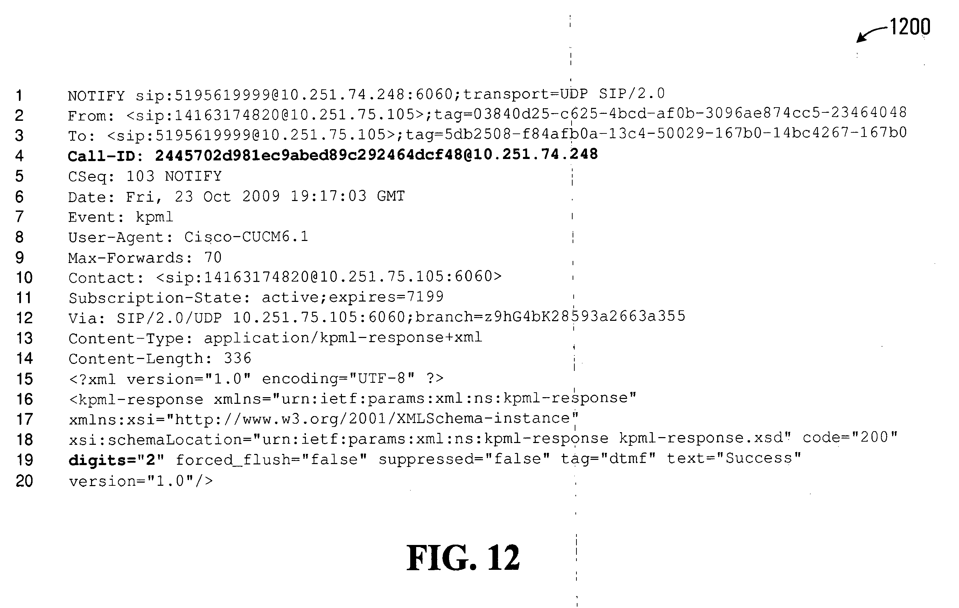

When the PBX 16 receives the DTMF tone from mobile device 11, the PBX 16 ascertains whether the DTMF tone is within the set of DTMF tones that was specified in the regular expression of SUBSCRIBE request 1000. If so (as in the present example), the PBX 16 sends a NOTIFY message notifying the SMP 18 of the DTMF tone event (129-2). The format of an exemplary NOTIFY message 1200 is illustrated in FIG. 12. In accordance with KPML RFC 4730, the markup language of the NOTIFY message conforms to the XML schema of Appendix B, to which KPML responses generally comply.

Referring to FIG. 12, it can be seen that the Call-ID at line 4 of the NOTIFY message 1200 matches the Call-ID of message 1000, identifying the message as pertaining to the mobile call leg in question. Furthermore, the markup language attribute digits="2" at line 19 of FIG. 12 indicates to the SMP 18 that the DTMF tone received at PBX 16 was the DTMF tone associated with the symbol "2." Because this is the anticipated verification DTMF tone of the present example, the SMP 18 may conclude, based on the NOTIFY message 1200, that setup of the mobile call leg was successful. A 200 ok message is sent (129-3, FIG. 6B) in response to the NOTIFY message, in accordance with KPML RFC 4730.

Based on its earlier receipt of the indication of the call being answered at 128, the PBX 16 sends a 200 OK signal (message) to the SMP 18 (130). This message is responsive to the original invite 124. For clarity, this message does not serve to verify that the mobile call leg has been successfully established. The 200 OK message only indicates that the call was answered by some device, not that it was answered by mobile device 11 as expected. For example, even if the call had been automatically forwarded by mobile device 11 to a voicemail server and answered there, the 200 OK message would still have been sent. This is despite the fact that mobile call leg setup in that case would be considered unsuccessful. Rather, call leg setup verification is performed by the SMP 18 based on the event notification of 129-2, as described above.

It should be appreciated that the above-described approach of facilitating call leg verification represents an advantageous compromise. On one hand, the approach avoids wasted processing that might otherwise result if the subscription for DTMF tone event notification were effected before it was determined that the call to mobile device 11 was in a ringing state. By waiting until the ringing state is detected, the likelihood that call leg set up will succeed increases in comparison to the likelihood of call leg setup being successful before any ringing response is received, since the ringing response confirms, at the very least, that the mobile device 11 can be reached. If the subscription for event notification of DTMF tones were effected before the ringing state was detected and it turned out that the mobile device could not be reached, the subscription would have been made unnecessarily. Disadvantageously, that might necessitate the taking of steps for "undoing" the subscription. On the other hand, the approach commences configuration of the PBX 16 for call leg-specific event notification sufficiently early (i.e. upon detection of the ringing state) that, by the time that an audio channel has been established between the mobile device 11 and the PBX 16, the PBX 16 will, in most if not all cases, be ready receive and report any DTMFtones received over the mobile call leg.

It should be noted that, particularly in the case of the mobile device 11 roaming from its home cellular provider network or wherein a telephone call between PBX 16 and the mobile device 11 would be considered a long distance call, it is possible that the audio channel may become established before the 200 OK signal 130 is received by the SMP 18. In this circumstance, it is possible for the device 11 to have sent a verification DTMF tone before the 200 OK signal 130 is received. With the KPML subscription having been effected per 127-2, 127-3 and 127-4, however, it is expected that the PBX 16 will have sufficient time to configure itself for notifying the SMP 18 of the DTMF tone event (129-2) even in this circumstance.

To set up the outgoing call leg, the SMP 18 sends an invite over SIP-L with the destination number of the target phone 101 to the PBX 16 (132). When the invite is received at the PBX 16, the PBX dials the destination number to the target phone 101 (134), the target phone 101 picks up the call (136), and a 200 OK signal is sent from the PBX 16 to the SMP 18 (138), indicating that the target phone 101 is also ready to receive data.

To connect the two call legs, the SMP 18 sends an invite to the PBX 16, shuffling the SDP (140). Finally, when the call legs are connected, the PBX 16 sends a second 200 OK signal to the SMP 18, and the users of the device 11 and target phone 101 are able to communicate with one another.

In both of FIGS. 6A and 6B, the SMP 18 performs third party call control of the two call legs and their inter-connection, and the PBX 16 controls the call. The decision of whether to proceed with a mobile-initiated call or a PBX-initiated call can be set by policy. Specifically, the option to select either mobile-initiated or PBX-initiated calls is a feature provided in the SMP 18, and an administrator for the enterprise network 20 can determine which settingto use. For example, in some cases it may be more cost effective for the corporation to utilize PBX-initiated calls rather than mobile-initiated calls, and vice versa. However, it is appreciated that the system 10 is not limited to the above processes.

FIGS. 7A and 7B are signaling diagrams illustrating the creation of mobile terminated calls utilizing SIP 80. In these figures, it is the target phone 101 that originates the call to the mobile device 11, not the mobile device 11 originating calls to the target phone 101 as in FIGS. 6A and 6B. For this reason the calls are referred to as "mobile-terminated" (rather than "mobile-originated") calls. The processing illustrated in FIGS. 7A and 7B illustrates how the call can be terminated (i.e. received) at the mobile device 11 despite possibly appearing to the user of phone 101 as being received on an office telephone, such as the digital telephone set 17 or analog telephone set 15.

Turning first to FIG. 7A, the processing of mobile-terminated, mobile-initiated calls is illustrated. The calls are referred to as "mobile-initiated" because, during the setup of the mobile call leg between the PBX 16 and the mobile device 11, the mobile device 11 dials the PBX 16 rather than the opposite. In other words, SMP 18 provides the mobile device 11 with the DNIS number into which the mobile device 11 should call.

Initially, the target phone calls the PBX 16, and the PBX 16 receives the call (150). This creates an incoming call leg between the target phone 101 and the PBX 16.

To create a mobile call leg between the PBX 16 and the mobile device 11, the PBX 16, upon receipt of the call from phone 101, sends an invite to the SMP 18 over SIP-L (152). In response to the invite, the SMP 18 sends a call request with the DNIS number and source details to the device 11 (154), which is confirmed to the SMP (156). In addition to confirming the call, the mobile device 11 sends a cellular call to the DNIS number at the PBX 16 (158). Again, as the DNIS number is routed in the dialing plans to the SMP 18, upon receipt of the cellular call, the PBX 16 sends an invite over SIP-T to the SMP 18 with the DNIS number (160). In response to the invite, a "200 OK" signal is sent over SIP-T from the SMP 18 to the PBX 16, acknowledging that the mobile call leg is established (162).

Finally, the initial invite (152) is acknowledged with the "200 OK" signal with the cellular SDP (164), at which point the call legs are joined and the target phone 101 and device 11 can communicate with one another on the call.

Turning to FIG. 7B, the processing of mobile-terminated, PBX-initiated calls is illustrated. The calls are referred to as "PBX-initiated" because, during the setup of the mobile call leg, the PBX 16 dials the mobile device 11 rather than the opposite. That is, the PBX 16 places an incoming call to the mobile device 11 with the ANI number of the target phone 101.

Specifically, as with the mobile-initiated call described above and shown in FIG. 7A at 150, the target phone 101 places an incoming call to the destination number of the device, which is received at the PBX 16 (170, FIG. 7B) to form the incoming call leg.

To create the mobile call leg, the PBX 16 thereafter sends an invite over SIP-L to the SMP 18 (172) with the source number of the target phone 101. In response to the invite, the SMP 18 sends a call request with the source numberto the device 11 (174), with the ANI number the device should expect in the incoming call, the call request being confirmed by the device (176).

At this point, the SMP 18 sends a command (178) that causes the PBX 16 to place a cellular telephone call to the mobile device 11. The sending of the command (178) of FIG. 7B is analogous to the sending of the command (124) of FIG. 6B. In the present embodiment, the command is a SIP invite message in accordance with RFC 3261. The invite message specifies the cellular telephone number of the mobile device 11 and the ANI number that is attached to the outgoing call, i.e. the number to be used by the PBX 16 to call out to the mobile device 11. The invite message may be similar to message 800 of FIG. 8. The invite message is sent over SIP-T to the PBX 16.

Upon receipt of the invite message, the PBX 16 places a cellular telephone call to the mobile device 11 (180, FIG. 7B), i.e. dials the cellular telephone number specified in the invite message using the outgoing ANI number specified in that message. This prompts the mobile device 11 to ring.

After placing the call, the PBX 16 sends an indicatorto the SMP 18 that the telephone call is in a ringing state (181-1, which is analogous to 127-1 of FIG. 6B). In the present embodiment, the indicator is a SIP 180 ringing response, in accordance with RFC 3261, which may have a format similar to that shown in FIG. 9. In response to its receipt of the ringing response, the SMP 18 subscribes (181-2) with the PBX 16 to receive event notification of DTMF tones provided by the mobile device 11 via the cellular call, i.e. the SMP 18 sends a SUBSCRIBE request in accordance with KPML RFC 4730. The format of the SUBSCRIBE request may be similar to that shown in FIG. 10.

Upon receipt of the SUBSCRIBE request, the PBX 16 configures itself (181-3, FIG. 7B) to provide the requested event notification to the SMP 18, as described earlier in the context of FIG. 6B. The PBX 16 also sends a 200 OK message to the SMP 18 in response to the SUBSCRIBE request (181-4), in accordance with the KPML RFC 4730.

At this stage, the call is answered by the mobile device 11, i.e., its state changes from ringing to answered (182). This may occur when the user of mobile device 11 presses an "answer call" key on a keypad of the device 11 for example. The mobile device 11 checks whether the ANI number of the incoming call matches the anticipated ANI which was earlier communicated to the mobile device 11 at 174 (FIG. 7B). If the two match, this will confirm that the call is from the PBX 16.

Presuming that the ANI numbers match, the mobile device 11 next generates and sends one or more DTMF tones (183-1) over the audio channel of the cellular telephone call that was answered at 182, for use in verifying that the call leg has been successfully set up. The mobile device 11 is preprogrammed to send the DTMFtones(s) automatically soon after the call is answered. When the PBX 16 receives the DTMF tone(s) from mobile device 11, the PBX 16 ascertains whether the DTMF tone is within the set of DTMF tones of interest that was specified in the SUBSCRIBE request of 181-2. If so, the PBX 16 sends a NOTIFY message notifying the SMP 18 of the DTMF tone event (183-2). The format of the NOTIFY message may be similar to that illustrated in FIG. 12. A 200 ok message is sent (183-3, FIG. 7B) in response to the NOTIFY message, in accordance with KPML RFC 4730. The SMP 18 can use this NOTIFY message to verify whether mobile call leg setup was successful.

Based on its earlier receipt of the indication of the call being answered at 182, the PBX 16 then sends a 200 OK signal (message) to the SMP 18 (184). This message is responsive to the invite 178.

In response, a "200 OK" signal is also sent (186) from the SMP 18 to the PBX 16 in response to invite 172. This 200 OK effectively signals the target phone 101 that the user of mobile device 11 has answered the call. The SMP 18 then shuffles the SDP to connect the call legs, the call legs are joined, and the target phone 101 and device 11 can communicate with one other on the call.

As discussed above with respect to FIGS. 6A and 6B, the SMP 18 remains in control of the signaling between the target phone 101 and the mobile device 11 in both the mobile-initiated and PBX-initiated calls of FIGS. 7A and 7B respectively. Again, the decision to proceed with a mobile-initiated call or a PBX-initiated call is based on policy and may be set by a system administrator. In some cases, it may be more efficient or cost effective for the administrator to decide that PBX-initiated calls should be used, and in other cases, it may be more efficient or cost effective for mobile-initiated calls to be utilized. As these policy decisions may vary by organization and are not imperative to the scope of the present application, they will not be discussed in further detail.

Certain adaptations and modifications of the described embodiments can be made. Therefore, the above discussed embodiments are considered to be illustrative and not restrictive.

For example, in some embodiments, it may be possible use the above-described approach even for verifying call leg setup between the PBX 16 and the target phone 101. When the target phone is a device whose capabilities are not known to include the capability of automatically providing DTMF tone confirmation upon answering a call, then it may be difficult or impossible to apply this approach to the incoming or outgoing call leg. However, if the target phone could be determined to have that capability or could be retrofitted to have this capability, DTMFtone event notification in the incoming and/or outgoing call legs may be possible. The target phone may need to be adapted or configured, e.g. through configuration settings, software update or firmware update, to provide the anticipated DTMFtone(s) upon the call being answered/connected, in order for this to be possible.

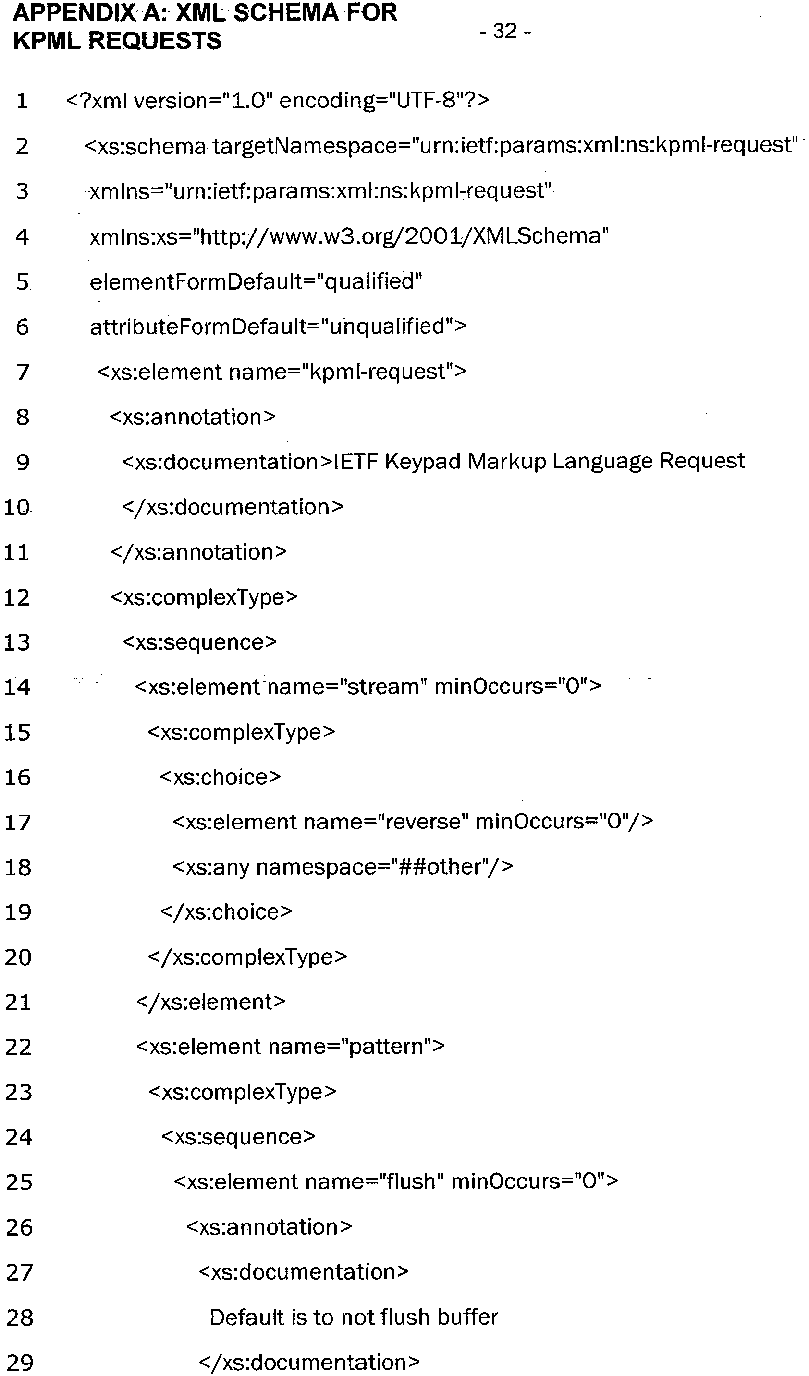

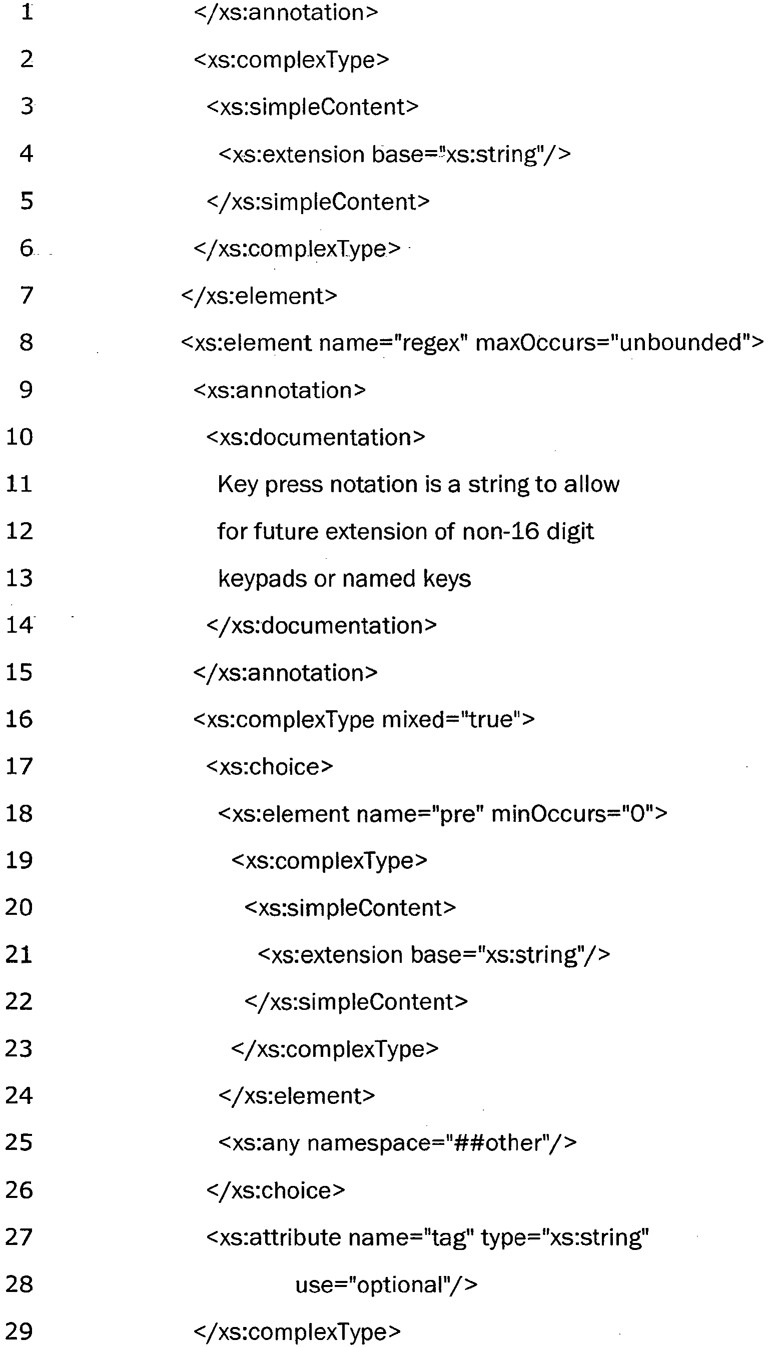

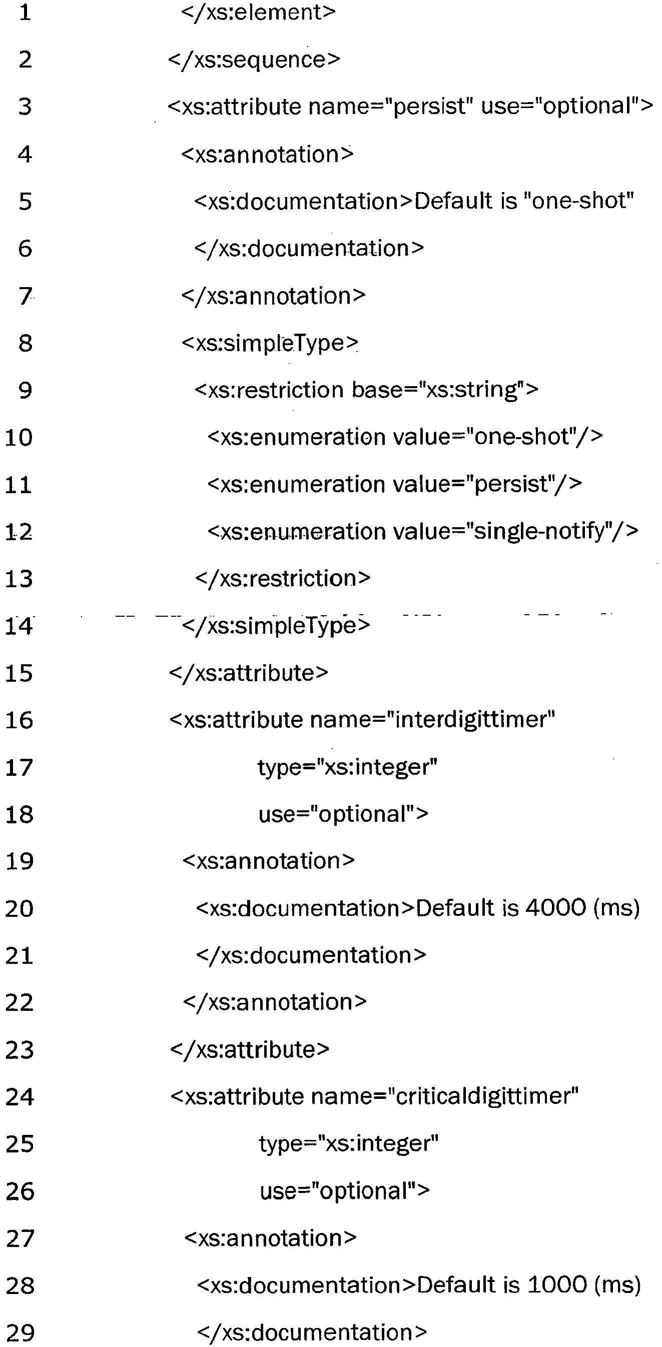

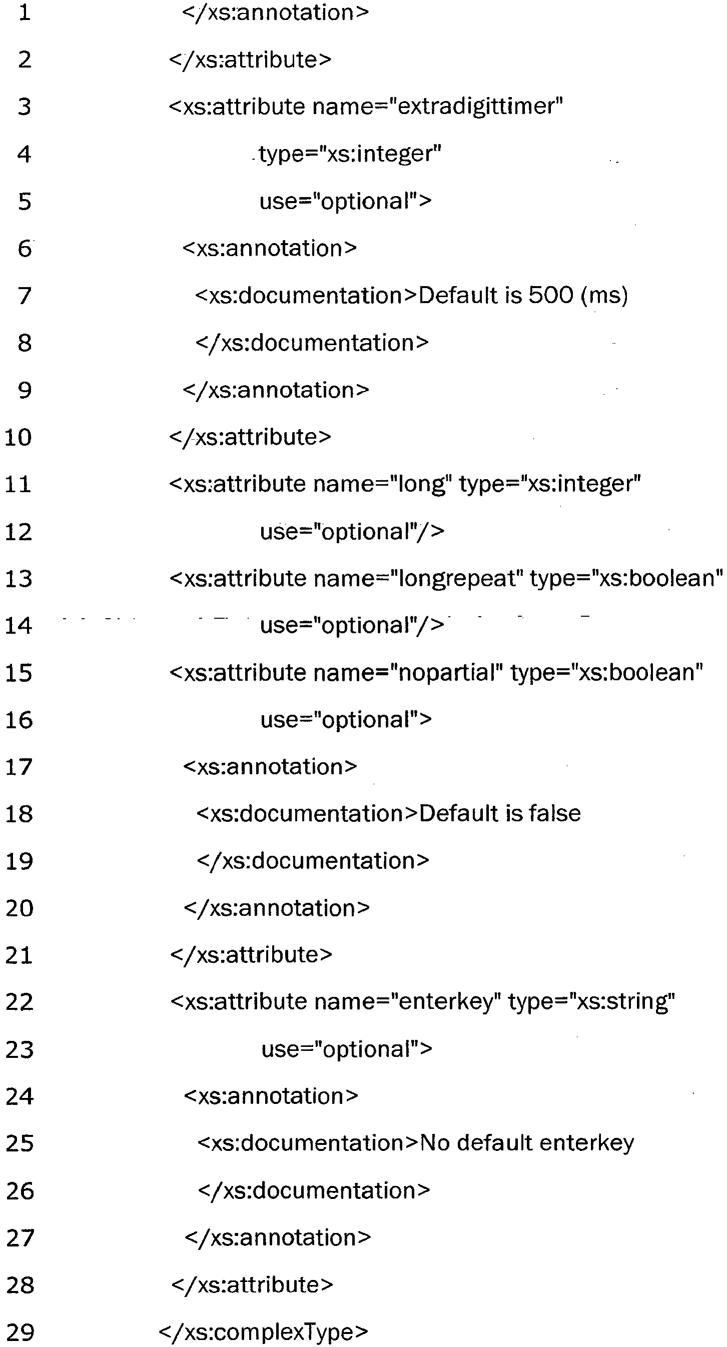

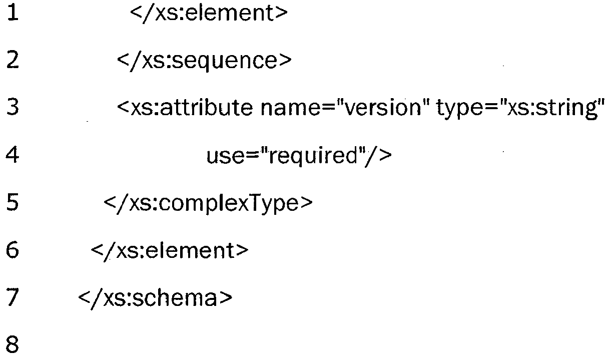

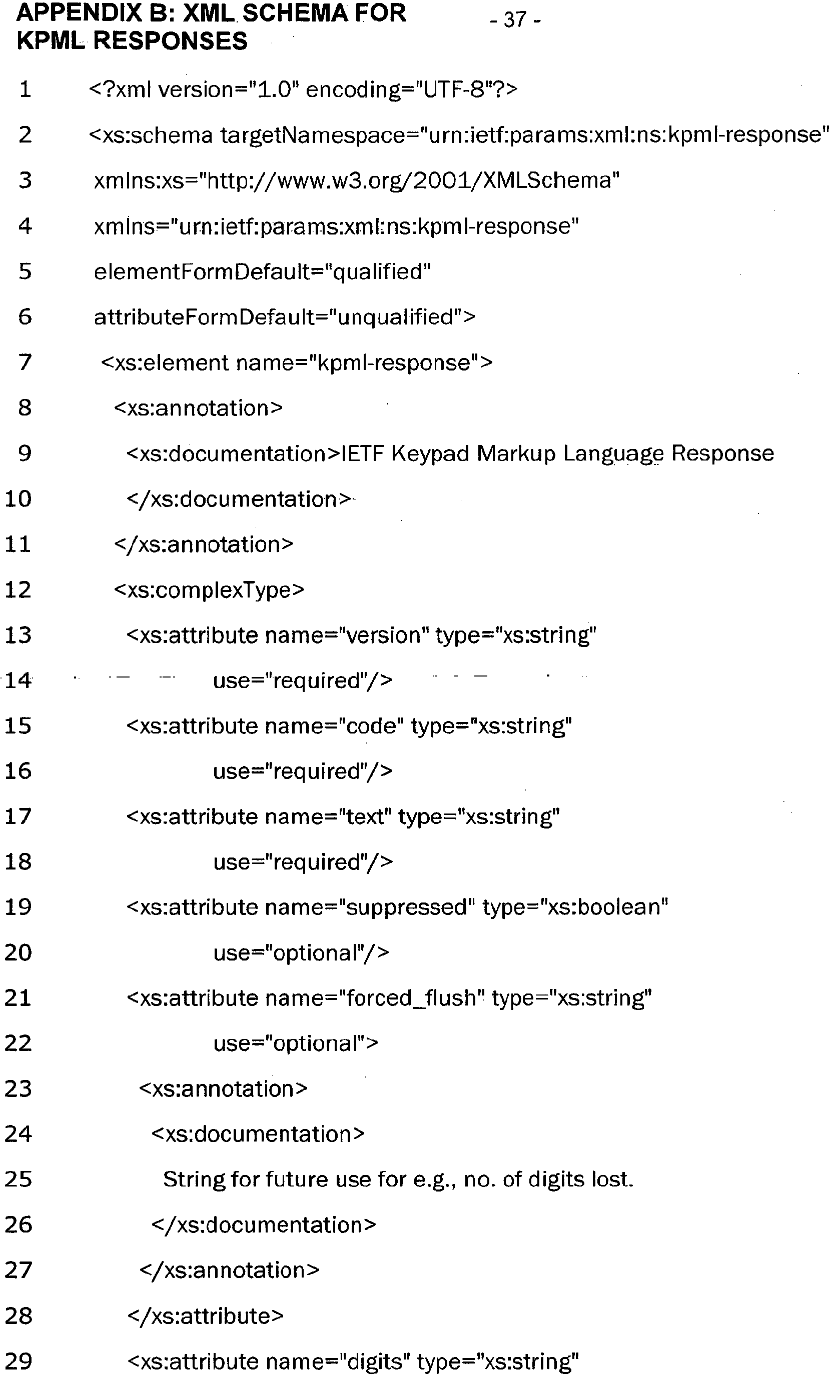

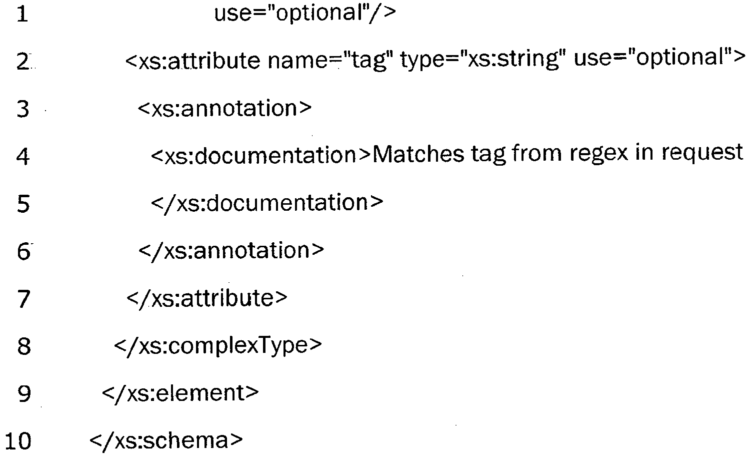

## Claims

1. In a third party call control system (10), a method of facilitating verification of call leg setup, the method comprising:
at a call control server (18) in communication with a private branch exchange 'PBX' (16):
sending (124, 178) a command for causing the PBX to initiate setup of a call leg between said PBX (16) and a telephone device (11), said initiating comprising placing a telephone call to said telephone device;
receiving (127-1, 181-1), from said PBX, an indicator that the telephone call is in a ringing state; and
in response to said indicator and before receiving (130, 184) confirmation from said PBX that said telephone call has been answered by said telephone device, subscribing (127-2, 181-2) with said PBX to receive event notification of one or more dual-tone multi-frequency 'DTMF' tones provided by said telephone device via
said telephone call,
wherein said subscribing occurs in response to said indicator so that configuration of said PBX for providing said event notification can be completed before any of said DTMF tones arrive at said PBX.

2. The method of claim 1 wherein said telephone device is a mobile device (11) and wherein said telephone call is a cellular telephone call.

3. The method of claim 1 or claim 2 wherein said command is a Session Initiation Protocol 'SIP' invite command (800) in accordance with Internet Engineering Task Force 'IETF' Request for Comments 'RFC' 3261 and wherein said indicator is a SIP ringing response (900) in accordance with IETF RFC 3261.

4. The method of any one of claims 1 to 3 wherein said subscribing comprises sending a subscribe message (1000) in accordance with IETF RFC 4730 and wherein said event notification comprises sending messages (1200) comprising markup language.

5. The method of claim 4 wherein said subscribe message specifies a subset of symbols of the set {0-9, *, #, A-D} in respect of which said event notification of DTMF tones is to be performed.

6. In a third party call control system (10), a method of facilitating verification of call leg setup, the method comprising:
at a private branch exchange 'PBX' (16):
in response to a command (124, 178) from a call control server (18) to initiate setup of a call leg between said PBX and a telephone device (11), placing (126, 180) a telephone call from said PBX to said telephone device;
sending (127-1, 181-1) an indicator to said call control server to indicate that said telephone call is in a ringing state;
after said sending and before receiving (128, 182) confirmation from said telephone device that said telephone call has been answered:
receiving (127-2, 181-2), from said call control server, a subscription request for event notification of one or more dual-tone multi-frequency 'DTMF' tones received from said telephone device via said telephone call; and
responsive to said subscription request, configuring (127-3, 181-3) said PBX to provide said event notification to said
call control server,
wherein said receiving of said subscription request occurs before said receiving of said confirmation so that said configuring can be completed before any of said DTMF tones arrive at said PBX.

7. The method of claim 6 wherein said telephone device is a mobile device (11) and wherein said telephone call is a cellular telephone call.

8. The method of claim 6 or claim 7 wherein said command is a Session Initiation Protocol 'SIP' invite command (800) in accordance with Internet Engineering Task Force 'IETF' Request for Comments 'RFC' 3261 and wherein said indicator is a SIP ringing response (900) in accordance with IETF RFC 3261.

9. The method of any one of claims 6 to 8 wherein said subscription request comprises a subscribe message (1000) in accordance with IETF RFC 4730 and
wherein said event notification comprises sending messages (1200) comprising markup language.

10. The method of claim 9 wherein said subscribe message specifies a subset of symbols of the set {0-9, *, #, A-D} in respect of which said event notification of DTMF tones is to be performed.

11. A machine-readable medium (31) storing instructions for facilitating verification of call leg setup in a third party call control system (10) that, when executed by a processor (27) of a call control server (18), cause said call control server to perform the steps of the method of any one of claims 1 to 5.

12. A machine-readable medium (25) storing instructions for facilitating verification of call leg setup in a third party call control system (10) that, when executed by a processor (21) of a private branch exchange 'PBX' (16), cause said PBX to perform the steps of the method of any one of claims 6 to 10.

13. A call control server (18) comprising:
a processor (27); and
memory (29) interconnected with said processor storing instructions for facilitating verification of call leg setup in a third party call control system that, when executed by said processor, cause said call control server to perform the steps of the method of any one of claims 1 to 5.

14. A private branch exchange 'PBX' (16) comprising:
a processor (21); and
memory (23) interconnected with said processor storing instructions for facilitating verification of call leg setup in a third party call control system that, when executed by said processor, cause said PBX to perform the steps of the method of any one of claims 6 to 10.

## Patentansprüche

1. Ein Verfahren zur Erleichterung einer Verifizierung einer Anrufabschnitteinrichtung in einem Anrufsteuerungssystem (10) eines Dritten, wobei das Verfahren aufweist:
an einem Anrufsteuerungsserver (18) in Kommunikation mit einer Nebenstellenanlage (PBX- private branch exchange) (16):
Senden (124, 178) eines Befehls zum Veranlassen der PBX, ein Einrichten eines Anrufabschnitts zwischen der PBX (16) und einer Telefonvorrichtung (11) zu initiieren, wobei das Initiieren ein Tätigen eines Telefonanrufs an die Telefonvorrichtung aufweist;
Empfangen (127-1, 181-1), von der PBX, eines Indikators, dass der Telefonanruf in einem Rufzustand ist; und
in Reaktion auf den Indikator und vor einem Empfangen (130, 184) einer Bestätigung von der PBX, dass der Telefonanruf von der Telefonvorrichtung angenommen wurde, Anmelden (127-2, 181-2) an der PBX, um eine Ereignisbenachrichtigung von einem oder mehreren Doppeltonmehrfrequenz(DTMF-dual-tone multi-frequency)-Ton/Tönen zu empfangen, der/die von der Telefonvorrichtung über den Telefonanruf vorgesehen wird/werden,
wobei das Anmelden in Reaktion auf den Indikator stattfindet derart, dass eine Konfiguration der PBX zum Vorsehen der Ereignisbenachrichtigung abgeschlossen werden kann, bevor einer der DTMF-Töne an der PBX ankommt.

2. Das Verfahren gemäß Anspruch 1, wobei die Telefonvorrichtung eine mobile Vorrichtung (11) ist und wobei der Telefonanruf ein zellularer Telefonanruf ist.

3. Das Verfahren gemäß Anspruch 1 oder Anspruch 2, wobei der Befehl ein SIP(Session Initiation Protocol)-Einladen-Befehl (800) in Übereinstimmung mit der IETF(Internet Engineering Task Force)-RFC(Request for Comments) 3261 ist, und wobei der Indikator eine SIP-Ruf-Antwort (900) in Übereinstimmung mit IETF RFC 3261 ist.

4. Das Verfahren gemäß einem der Ansprüche 1 bis 3, wobei das Anmelden aufweist ein Senden einer Anmeldungsnachricht (1000) in Übereinstimmung mit IETF RFC 4730 und wobei die Ereignisbenachrichtigung ein Senden von Nachrichten (1200) aufweist, die eine Auszeichnungssprache aufweisen.

5. Das Verfahren gemäß Anspruch 4, wobei die Anmeldungsnachricht einen Teilsatz von Symbolen des Satzes {0-9, *, #, A-D} hinsichtlich darauf spezifiziert, welche Ereignisbenachrichtigung von DTMF-Tönen durchzuführen ist.

6. Ein Verfahren zur Erleichterung einer Verifizierung einer Anrufabschnitteinrichtung in einem Dritt-Anrufsteuerungssystem (10), wobei das Verfahren aufweist:
in einer Nebenstellenanlage (PBX- private branch exchange) (16):
in Reaktion auf einen Befehl (124, 178) von einem Anrufsteuerungsserver (18) zum Initiieren eines Einrichtens eines Anrufabschnitts zwischen der PBX und einer Telefonvorrichtung (11), Tätigen (126, 180) eines Telefonanrufs von der PBX an die Telefonvorrichtung;
Senden (127-1, 181-1) eines Indikators an den Anrufsteuerungsserver, um anzugeben, dass der Telefonanruf in einem Rufzustand ist;
nach dem Senden und vor einem Empfangen (128, 182) einer Bestätigung von der Telefonvorrichtung, dass der Telefonanruf angenommen wurde:
Empfangen (127-2, 181-2), von dem Anrufsteuerungsserver, einer Anmeldungsanforderung für eine Ereignisbenachrichtigung von einem oder mehreren Doppeltonmehrfrequenz(DTMF - dual-tone multi-frequency)-Ton/Tönen, der/die von der Telefonvorrichtung über den Telefonanruf empfangen wird/werden; und
in Reaktion auf die Anmeldungsanforderung, Konfigurieren (127-3, 181-3) der PBX, um die Ereignisbenachrichtigung an den Anrufsteuerungsserver vorzusehen,
wobei das Empfangen der Anmeldungsanforderung stattfindet vor dem Empfangen der Bestätigung derart, dass das Konfigurieren abgeschlossen werden kann, bevor einer der DTMF-Töne an der PBX ankommt.

7. Das Verfahren gemäß Anspruch 6, wobei die Telefonvorrichtung eine mobile Vorrichtung (11) ist und wobei der Telefonanruf ein zellularer Telefonanruf ist.

8. Das Verfahren gemäß Anspruch 6 oder Anspruch 7, wobei der Befehl ein SIP(Session Initiation Protocol)-Einladen-Befehl (800) in Übereinstimmung mit der IETF(Internet Engineering Task Force)-RFC(Request for Comments) 3261 ist, und wobei der Indikator eine SIP-Ruf-Antwort (900) in Übereinstimmung mit IETF RFC 3261 ist.

9. Das Verfahren gemäß einem der Ansprüche 6 bis 8, wobei die Anmeldungsanforderung eine Anmeldungsnachricht (1000) in Übereinstimmung mit IETF RFC 4730 aufweist und wobei die Ereignisbenachrichtigung ein Senden von Nachrichten (1200) aufweist, die eine Auszeichnungssprache aufweisen.

10. Das Verfahren gemäß Anspruch 9, wobei die Anmeldungsnachricht einen Teilsatz von Symbolen des Satzes {0-9, *, #, A-D} hinsichtlich darauf spezifiziert, welche Ereignisbenachrichtigung von DTMF-Tönen durchzuführen ist.

11. Ein maschinenlesbares Medium (31), das Anweisungen speichert zur Erleichterung einer Verifizierung einer Anrufabschnitteinrichtung in einem Dritt-Anrufsteuerungssystem (10), die, wenn durch einen Prozessor (27) eines Anrufsteuerungsservers (18) ausgeführt werden, den Anrufsteuerungsserver veranlassen, die Schritte des Verfahrens gemäß einem der Ansprüche 1 bis 5 durchzuführen.

12. Ein maschinenlesbares Medium (25), das Anweisungen speichert zur Erleichterung einer Verifizierung einer Anrufabschnitteinrichtung in einem Dritt-Anrufsteuerungssystem (10), die, wenn durch einen Prozessor (21) einer Nebenstellenanlage (PBX - private branch exchange) (16) ausgeführt werden, die PBX veranlassen, die Schritte des Verfahrens gemäß einem der Ansprüche 6 bis 10 durchzuführen.

13. Ein Anrufsteuerungsserver (18), der aufweist:
einen Prozessor (27); und
einen Speicher (29), der mit dem Prozessor verbunden ist, zum Speichern von Anweisungen zur Erleichterung einer Verifizierung einer Anrufabschnitteinrichtung in einem Dritt-Anrufsteuerungssystem, die, wenn durch den Prozessor ausgeführt, den Anrufsteuerungsserver veranlassen, die Schritte des Verfahrens gemäß einem der Ansprüche 1 bis 5 durchzuführen.

14. Eine Nebenstellenanlage (PBX - private branch exchange) (16), die aufweist:
einen Prozessor (21); und
einen Speicher (23), der mit dem Prozessor verbunden ist, zum Speichern von Anweisungen zur Erleichterung einer Verifizierung einer Anrufabschnitteinrichtung in einem Dritt-Anrufsteuerungssystem, die, wenn durch den Prozessor ausgeführt, die PBX veranlassen, die Schritte des Verfahrens gemäß einem der Ansprüche 6 bis 10 durchzuführen.

## Revendications

1. Dans un système de contrôle d'appel de tiers (10), procédé pour faciliter la vérification de l'établissement de segment d'appel, le procédé comprenant :
au niveau d'un serveur de contrôle d'appel (18) en communication avec un autocommutateur privé 'PBX' (16) :
l'envoi (124, 178) d'une commande pour amener le PBX à lancer l'établissement d'un segment d'appel entre ledit PBX (16) et un dispositif téléphonique (11), ledit lancement comprenant l'exécution d'un appel téléphonique vers ledit dispositif téléphonique ;
la réception (127-1, 181-1), dudit PBX, d'un indicateur indiquant que l'appel téléphonique est dans un état de sonnerie ; et
en réponse au dit indicateur et avant la réception (130, 184) d'une confirmation dudit PBX que ledit appel téléphonique a reçu une réponse dudit dispositif téléphonique, l'abonnement (127-2, 181-2) auprès dudit PBX pour recevoir une notification d'événement d'une ou de plusieurs tonalités DTMF, multifréquence à deux tonalités, fournies par ledit dispositif téléphonique par l'intermédiaire dudit appel téléphonique,
dans lequel ledit abonnement s'effectue en réponse au dit indicateur de sorte que la configuration dudit PBX pour fournir ladite notification d'événement peut être achevée avant que l'une quelconque desdites tonalités DTMF n'arrive au niveau dudit PBX.

2. Procédé selon la revendication 1, dans lequel ledit dispositif téléphonique est un dispositif mobile (11), et dans lequel ledit appel téléphonique est un appel téléphonique cellulaire.

3. Procédé selon la revendication 1 ou la revendication 2, dans lequel ladite commande est une commande d'invite SIP, Session Initiation Protocol, (800) conforme à la demande de commentaires RFC 3261 de l'IETF, Internet Engineering Task Force, et dans lequel ledit indicateur est une réponse de sonnerie SIP (900) conforme à la RFC 3261 de l'IETF.

4. Procédé selon l'une quelconque des revendications 1 à 3, dans lequel ledit abonnement comprend l'envoi d'un message d'abonnement (1000) conforme à la RFC 4730 de l'IETF, et dans lequel ladite notification d'événement comprend l'envoi de messages (1200) comprenant un langage de balisage.

5. Procédé selon la revendication 4, dans lequel ledit message d'abonnement spécifie un sous-ensemble de symboles de l'ensemble {0-9, *, #, A-D} en relation avec lequel ladite notification d'événement de tonalités DTMF doit être effectuée.

6. Dans un système de contrôle d'appel de tiers (10), procédé pour faciliter la vérification de l'établissement de segment d'appel, le procédé comprenant :
au niveau d'un autocommutateur privé 'PBX' (16) :
en réponse à une commande (124, 178) provenant d'un serveur de contrôle d'appel (18) pour lancer l'établissement d'un segment d'appel entre ledit PBX et un dispositif téléphonique (11), l'exécution (126, 180) d'un appel téléphonique dudit PBX vers ledit dispositif téléphonique ;
l'envoi (127-1, 181-1) d'un indicateur au dit serveur de contrôle d'appel pour indiquer que ledit appel téléphonique est dans un état de sonnerie ;
après ledit envoi et avant la réception (128, 182) d'une confirmation dudit dispositif téléphonique que ledit appel téléphonique a reçu une réponse :
la réception (127-2, 181-2), dudit serveur de contrôle d'appel, d'une demande d'abonnement pour une notification d'événement d'une ou de plusieurs tonalités DTMF, multifréquence à deux tonalités, reçues dudit dispositif téléphonique par l'intermédiaire dudit appel téléphonique ; et
en réponse à ladite demande d'abonnement, la configuration (127-3, 181-3) dudit PBX pour fournir ladite notification d'événement au dit serveur de contrôle d'appel,
dans lequel ladite réception de ladite demande d'abonnement a lieu avant ladite réception de ladite confirmation de sorte que ladite configuration peut être achevée avant que l'une quelconque des tonalités DTMF n'arrive au niveau dudit PBX.

7. Procédé selon la revendication 6, dans lequel ledit dispositif téléphonique est un dispositif mobile (11), et dans lequel ledit appel téléphonique est un appel téléphonique cellulaire.

8. Procédé selon la revendication 6 ou la revendication 7, dans lequel ladite commande est une commande d'invite SIP, Session Initiation Protocol, (800) conforme à la demande de commentaires RFC 3261 de l'IETF, Internet Engineering Task Force, et dans lequel ledit indicateur est une réponse de sonnerie SIP (900) conforme à la RFC 3261 de l'IETF.

9. Procédé selon l'une quelconque des revendications 6 à 8, dans lequel ladite demande d'abonnement comprend un message d'abonnement (1000) conforme à la RFC 4730 de l'IETF, et dans lequel ladite notification d'événement comprend l'envoi de messages (1200) comprenant un langage de balisage.

10. Procédé selon la revendication 9, dans lequel ledit message d'abonnement spécifie un sous-ensemble de symboles de l'ensemble {0-9, *, #, A-D} en relation avec lequel ladite notification d'événement de tonalités DTMF doit être effectuée.

11. Support pouvant être lu par une machine (31) mémorisant des instructions pour faciliter la vérification de l'établissement de segment d'appel dans un système de contrôle d'appel de tiers (10) qui, lorsqu'elles sont exécutées par un processeur (27) d'un serveur de contrôle d'appel (18), amènent ledit serveur de contrôle d'appel à effectuer les étapes du procédé selon l'une quelconque des revendications 1 à 5.

12. Support pouvant être lu par une machine (25) mémorisant des instructions pour faciliter la vérification de l'établissement de segment d'appel dans un système de contrôle d'appel de tiers (10) qui, lorsqu'elles sont exécutées par un processeur (21) d'un autocommutateur privé 'PBX' (16), amènent ledit PBX à effectuer les étapes du procédé selon l'une quelconque des revendications 6 à 10.

13. Serveur de contrôle d'appel (18) comprenant :
un processeur (27) ; et
une mémoire (29) interconnectée avec ledit processeur mémorisant des instructions pour faciliter la vérification de l'établissement de segment d'appel dans un système de contrôle d'appel de tiers qui, lorsqu'elles sont exécutées par ledit processeur, amènent ledit serveur de contrôle d'appel à effectuer les étapes du procédé selon l'une quelconque des revendications 1 à 5.

14. Autocommutateur privé 'PBX' (16) comprenant :
un processeur (21) ; et
une mémoire (23) interconnectée avec ledit processeur mémorisant des instructions pour faciliter la vérification de l'établissement de segment d'appel dans un système de contrôle d'appel de tiers qui, lorsqu'elles sont exécutées par ledit processeur, amènent ledit PBX à effectuer les étapes du procédé selon l'une quelconque des revendications 6 à 10.
